# EUROPEAN PATENT SPECIFICATION

(11) **EP 2 299 220 B1**
(45) Date of publication and mention of the grant of the patent: **25.10.2017**
(21) Application number: 09834460.9
(22) Date of filing: 24.12.2009
(51) Int. Cl.: F25D 29/00, F25D 11/00, G01J 1/04

(54) **REFRIGERATOR**
KÜHLSCHRANK
RÉFRIGÉRATEUR

(30) Priority: 24.12.2008 JP 2008326942; 12.05.2009 JP 2009115418; 01.07.2009 JP 2009156720; 18.09.2009 JP 2009216657; 18.09.2009 JP 2009216659; 30.09.2009 JP 2009226955
(43) Date of publication of application: 23.03.2011
(73) Proprietor: Panasonic Corporation, Kadoma-shi Osaka 571-8501 (JP)
(72) Inventor: KAKITA, Kenichi, Chuo-ku, Osaka 540-6207 (JP); MAMEMOTO, Toshiaki, Chuo-ku, Osaka 540-6207 (JP); KAMISAKO, Toyoshi, Chuo-ku, Osaka 540-6207 (JP); NAKANISHI, Kazuya, Chuo-ku, Osaka 540-6207 (JP); NAGAHATA, Shinya, Chuo-ku, Osaka 540-6207 (JP); TSUJII, Yasuhiro, Chuo-ku, Osaka 540-6207 (JP)
(74) Representative: Eisenführ Speiser
(86) International application number: PCT/JP2009/007167
(87) International publication number: WO 2010/073653

(56) References cited:
- GB-A- 2 342 502
- JP-A- 51 135 585
- JP-A- 2003 156 274
- JP-A- 2003 185 325
- JP-A- 2003 185 325
- JP-A- 2004 360 985
- JP-A- 2005 055 062
- JP-A- 2005 055 134

## Description

### [Technical Field]

The present invention relates to a refrigerator provided with an illumination detection unit, such as a light sensor that detects the surrounding brightness, in the front surface of the main body of the refrigerator.

### [Background Art]

Among conventional refrigerators, refrigerators in which normal operation is carried out in the case where a light sensor has detected a predetermined amount or more of illumination, whereas it is assumed that a user is most likely sleeping and will not open the door of the refrigerator in the case where the light sensor has detected less than the predetermined amount of illumination, and thus power-saving operation that uses less power than when operating at normal temperatures is carried out, have been commercialized. This power-saving operation increases the set temperature of, for example, the freezer compartment by several °C.

Meanwhile, such conventional refrigerators have also carried out power-saving operation in the case where the user sleeps with some lights left on (for example, see PTL 1).

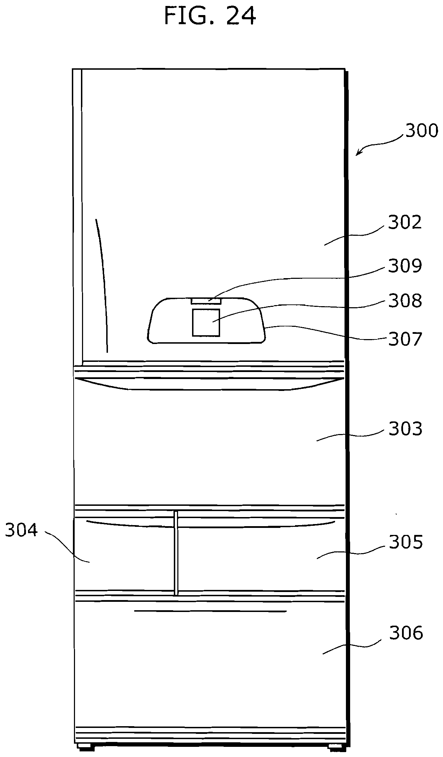

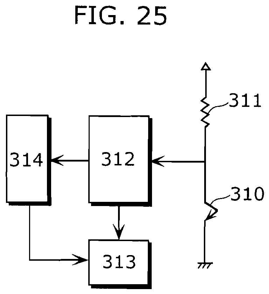

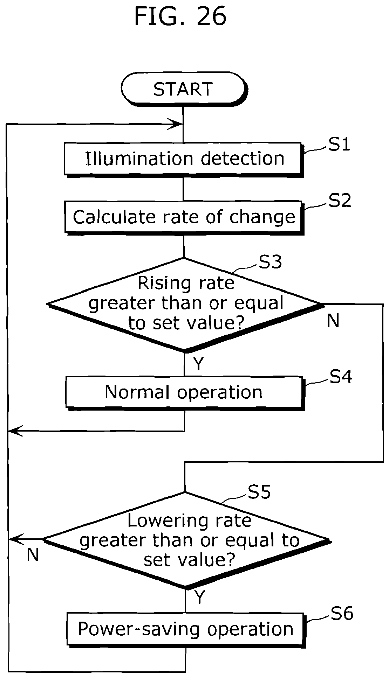

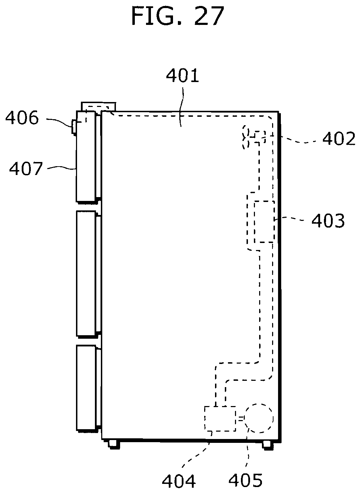

FIG. 24 illustrates a front view of such a refrigerator; FIG. 25 illustrates an example of an electric circuit diagram; and FIG. 26 is a descriptive diagram illustrating the operational state of a refrigerator that uses this electric circuit.

In FIG. 24, a refrigerator 300 includes a refrigerating compartment door 302, a vegetable compartment door 303, an ice compartment door 304, a switchable compartment door 305, and a freezer compartment door 306. An operation unit 307 includes various operation switches (not shown), a liquid crystal display unit 308, and a light sensor housing unit 309.

A light sensor 310 for detecting illumination in the periphery of the refrigerator, as illustrated in FIG. 25, is housed within the light sensor housing unit 309. A resistance 311, an AD converter 312 that converts an inputted analog voltage value into a digital signal and outputs the digital signal, a storage device 313 for storing signals from the AD converter 312, and a microcomputer (control device; control unit) for controlling the operation of a compressor (not shown) and the like having been inputted with signals from the AD converter 312, are connected to the light sensor 310. Note that the operation of the compressor is primarily on/off control based on a freezer compartment sensor (not shown).

A microcomputer 314 operates in the manner described hereinafter (see FIG. 26).

When a switch (not shown) for enabling power-saving operation is pressed, the light sensor 310 detects illumination in the periphery of the front side of the refrigerator (S1). The rate of change of the illumination is then computed (S2). The rate of change of the illumination is calculated by dividing the change in the illumination by the amount of time over which the change occurred. For example, in the case where a change of 150 lux (Lx) occurred over one second, the rate of change is calculated as 150 Lx/second. 150 Lx/second is then set as a predetermined rate of change. However, it is thought that any value within the range of 100 to 200 Lx/second may be set as this setting value.

After the rate of change has been calculated, it is determined whether or not that rate of change is greater than or equal to the setting value, or in other words, greater than or equal to 150 Lx/second (S3). As a result, if the rate of change is greater than or equal to the setting value, normal operation is carried out (S4), whereas in the case where the rate of change is not greater than or equal to the setting value, it is determined whether or not a lowering rate is greater than or equal to a set value (S5). If the lowering rate is greater than or equal to a predetermined value, power-saving operation is carried out (S6), whereas if the lowering rate is not greater than or equal to the setting value, the illumination detection of S1 is carried out once again.

Note that operation in which the set temperature of the freezer compartment (normally -20°C; the setting value can be changed) is controlled so as to adhere to this setting temperature is taken as normal operation, whereas operation in which the inside temperature of the freezer compartment is controlled to be 2°C closer to room temperature from the set temperature (which is assumed, for example, to be -20°C), resulting in a temperature of -18°C, is taken as power-saving operation. For this reason, in the power-saving operation, the time for which the compressor operates is shorter and the time for which the compressor is stopped is longer than when in normal operation, making it possible to save more power than when in normal operation.

A refrigerator configured in this manner operates as follows. For example, around 11 o'clock at night, the user goes to sleep, and therefore turns down the lights. For example, assuming that three 20 W fluorescent bulbs were lighted, the user reduces this to one 20 W bulb, and goes to sleep. The lowering rate of the illumination at this time is computed by the microcomputer, and it is determined that the lowering rate is greater than or equal to the predetermined value; thus the refrigerator commences power-saving operation.

With the refrigerator controlled in this manner, control is carried out so the refrigerator is capable of power-saving operation when, for example, the light has been dimmed, and thus more power can be saved than with the conventional control, in which normal operation or power-saving operation is carried out based on whether the illumination is greater than or equal to a predetermined amount or less than the predetermined amount.

Meanwhile, there are also refrigerators that carry out power-saving operation by providing a light-detecting element in the front surface of the door that detects the surrounding brightness and controlling the rotational frequency of a compressor, fan motor, and the like when it is dark (for example, see PTL 2).

FIG. 27 is a side view of a conventional refrigerator as disclosed in PTL 2. As illustrated in FIG. 27, the refrigerator is configured of a refrigerator main body 401, a fan motor 402, an inverter frequency control unit 403, an inverter main circuit unit 404, a compressor 405, a storage compartment door 407, and a light-detecting element 406 disposed on the front surface of the storage compartment door 407.

PTL 3 disclosing the features of the preamble of attached claim 1, refers to a refrigerator, having, among others, a refrigerator main body, an operation unit provided on a front surface of that refrigerator main body, an operation board provided in that operation unit, and an illumination detection unit provided in that operation board and configured to detect a brightness in a vicinity of the front surface of that refrigerator main body wherein the illumination detection unit is disposed above the operation switch.

Moreover, PTL 4 discloses a refrigerator with French doors wherein a backing portion of one of the doors of a storage chamber shuts-off ventilation in a door space when the French doors are closed. A display part with a single electric light source or a plurality of electric lights sources are arranged at the position of a gap of the door space. The light sources are controlled corresponding to the out-puts of detecting parts detecting an internal condition and to the controlling conditioner for control part electrically controlling the internal condition. The backing portion is turnable and the backing portion is put into "a backing turned condition" during opening the doors where it is turned to the backside of the door. It is put into "a backing regulated condition" during closing the doors where it is turned to the backside of the other door.

PTL 5 discloses a light emitting device and a photosensitive device mounted on a substrate and sealed with encapsulant. A black resin light shield member prevents scattered light from within the housing reaching the detector. The light shield has lugs for engaging with the sensor casing.

### [Citation List]

### [Patent Literature]

[PTL 1]
   Japanese Patent Application Publication No. 2002-107025
[PTL 2]
   Japanese Utility Model Publication No. S62-93671
[PTL 3]
   Japanese Patent Application 2003-185325
[PTL 4]
   Japanese Patent Application 2004-360985
[PTL 5]
   UK Patent Application 2 342 502

### [Summary of Invention]

### [Technical Problem]

However, it is not clear in either of the aforementioned conventional configurations what location is appropriate as the position in which the light-detecting element is installed in the refrigerator. For this reason, depending on the installation position of the light-detecting element, there has been a problem in that a light-receiving unit of the light-detecting element has been blocked in the case where, for example, paper has been attached to the surface of the refrigerator door, the case where a person stands in front of the refrigerator, and so on.

In addition, the specific configuration for installing the light-detecting element has not been clear either, and thus, depending on the installation configuration, there has been a problem in that the light-receiving unit of the light-detecting element has erroneously detected the surrounding brightness.

In addition, according to the configuration disclosed in PTL 1, even if the rate of change of the rise or fall of illumination is determined, the determination to switch between normal operation and power-saving operation is nevertheless carried out based only on the illumination. There has thus been a problem in that a more effective switch to power-saving operation has not been possible using only illumination detection, which easily succumbs to the influence of erroneous operations caused by external disturbances.

Having been achieved in order to solve the aforementioned conventional problems, it is an object of the present invention to provide a refrigerator capable of accurately performing illumination detection in the front surface of the refrigerator and carrying out highly-reliable controlled operation using the detected illumination level.

Furthermore, having been achieved in order to solve the aforementioned conventional problems, it is an object of the present invention to provide a refrigerator including a highly-reliable illumination detection unit capable of accurately performing illumination detection in the front surface of the refrigerator and using the detected illumination level.

Further still, having been achieved in order to solve the aforementioned conventional problems, it is an object of the present invention to provide a refrigerator capable of realizing energy conservation of high practical use by a control unit automatically switching between normal operation and power-saving operation not only by detecting changes in the illumination in the installation environment of the refrigerator, but by taking the usage state of the refrigerator into consideration as well.

### [Solution to Problem]

The above technical problem is solved by the features of claim 1 attached. Moreover dependent claims 2 to 6 refer to preferred embodiments of the invention.

### [Advantageous Effects of Invention]

According to the present invention, it is possible to provide a refrigerator that includes an illumination detection unit having improved illumination precision.

In addition, according to the present invention, the precision of the illumination detected by the illumination detection unit is improved, and erroneous operations caused particularly by external disturbances can be prevented.

In addition, according to the present invention, highly-reliably energy conservation can be realized, and thus it is possible to provide a refrigerator that conserves energy with more consideration placed on the environment.

### [Brief Description of Drawings]

[FIG. 1]

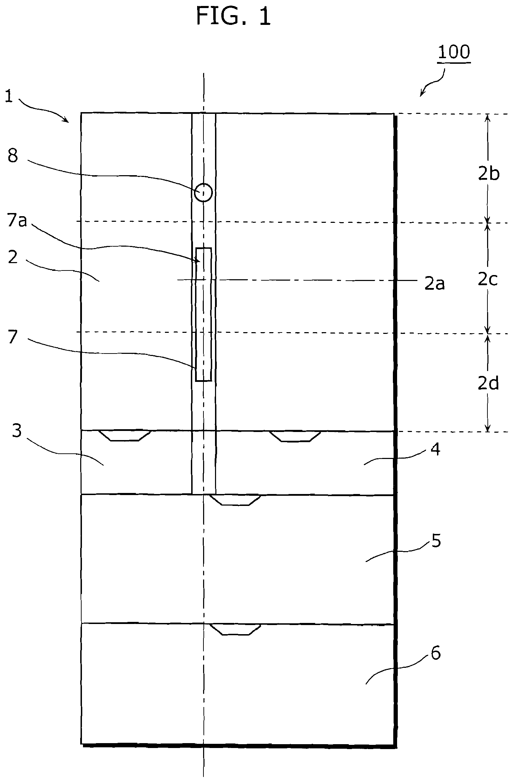

   FIG. 1 is a front view of a refrigerator according to a first embodiment of the present invention.
[FIG. 2]

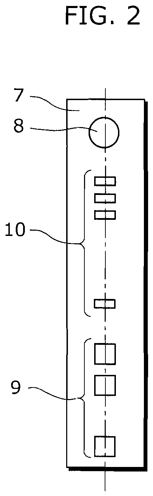

   FIG. 2 is a configuration diagram illustrating an operation board of a refrigerator according to a second embodiment of the present invention.
[FIG. 3]

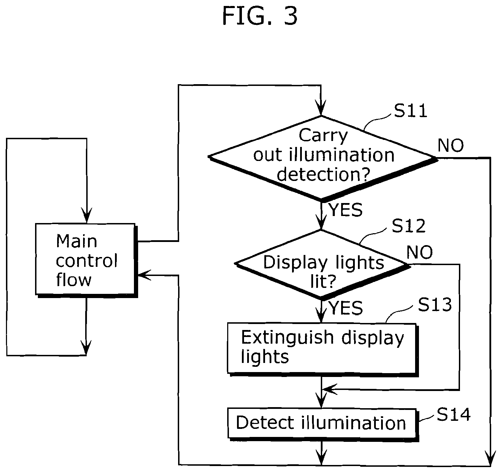

   FIG. 3 is a control flowchart of illumination detection in a refrigerator according to a third embodiment of the present invention.
[FIG. 4]

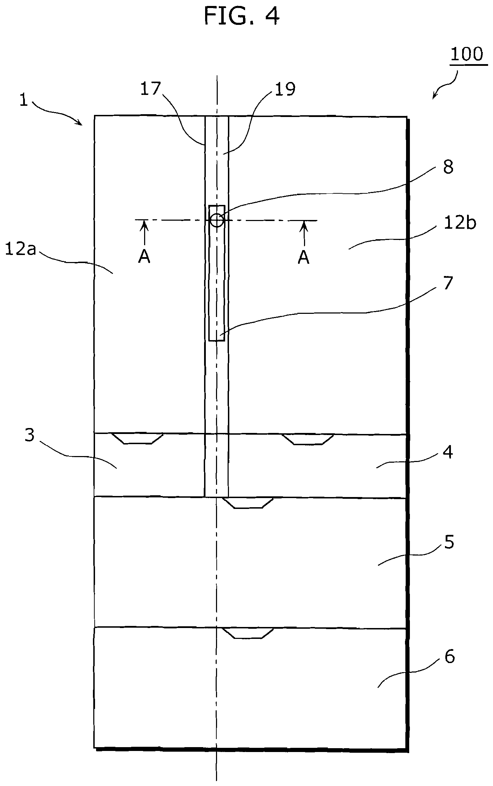

   FIG. 4 is a front view of a refrigerator according to a fourth embodiment of the present invention.
[FIG. 5]

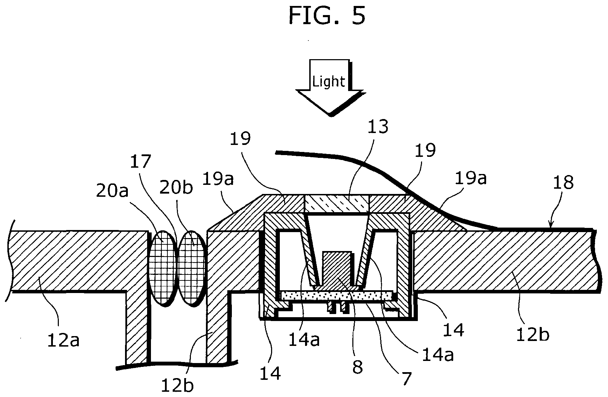

   FIG. 5 is a diagram illustrating an A-A cross-section of FIG. 4.
[FIG. 6]

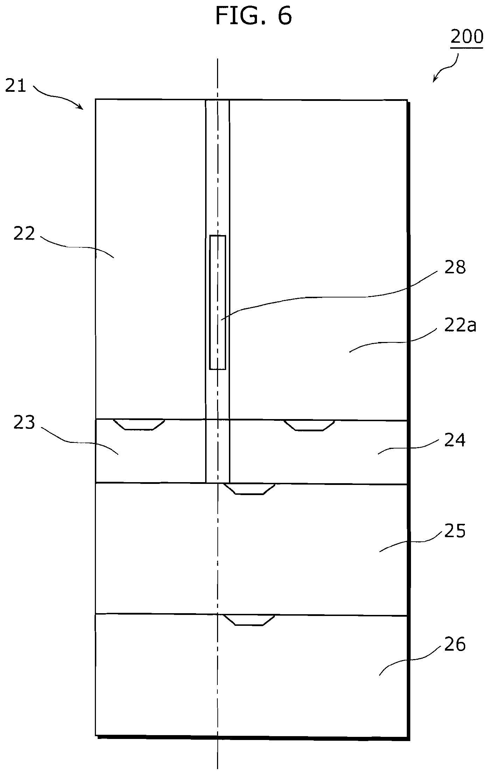

   FIG. 6 is a front view of a refrigerator according to a fifth embodiment of the present invention.
[FIG. 7]

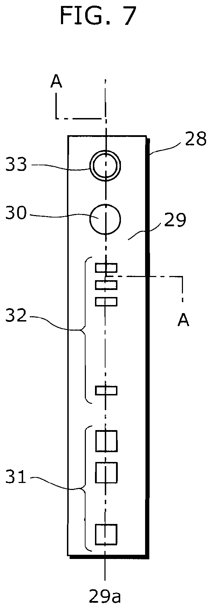

   FIG. 7 is a configuration diagram illustrating an operation unit of the refrigerator according to the fifth embodiment of the present invention.
[FIG. 8]

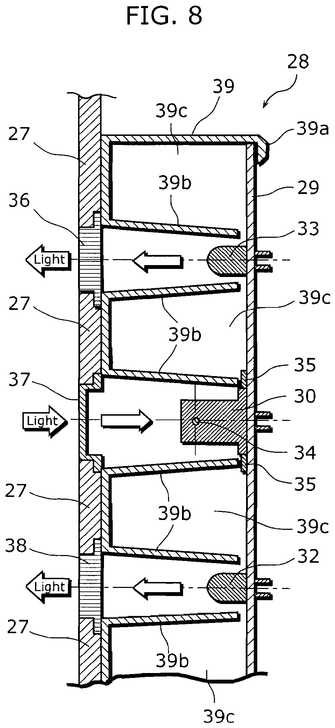

   FIG. 8 is a detailed cross-sectional view of the periphery of the operation unit of the refrigerator according to the fifth embodiment of the present invention.
[FIG. 9]

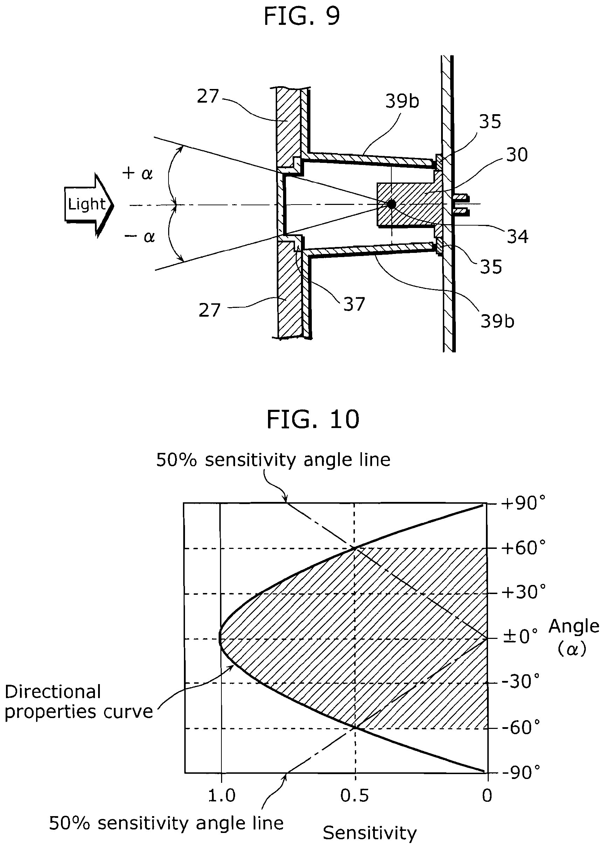

   FIG. 9 is a cross-sectional view of the principle elements in the periphery of an illumination detection unit of the refrigerator according to the fifth embodiment of the present invention.
[FIG. 10]
   FIG. 10 is a diagram illustrating directional properties of the illumination detection unit of the refrigerator according to the fifth embodiment of the present invention.
[FIG. 11]

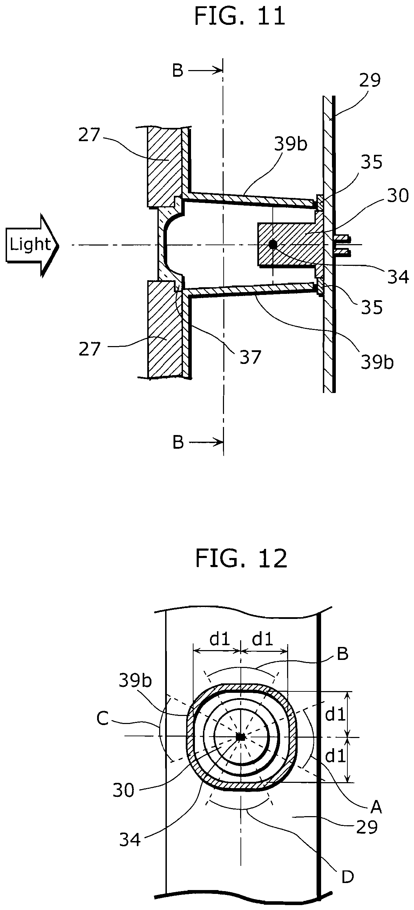

   FIG. 11 is a cross-sectional view of the principle elements in the periphery of an illumination detection unit of a refrigerator according to a sixth embodiment of the present invention.
[FIG. 12]
   FIG. 12 is a cross-sectional view of the periphery of an illumination detection unit of a refrigerator according to a seventh embodiment of the present invention.
[FIG. 13]

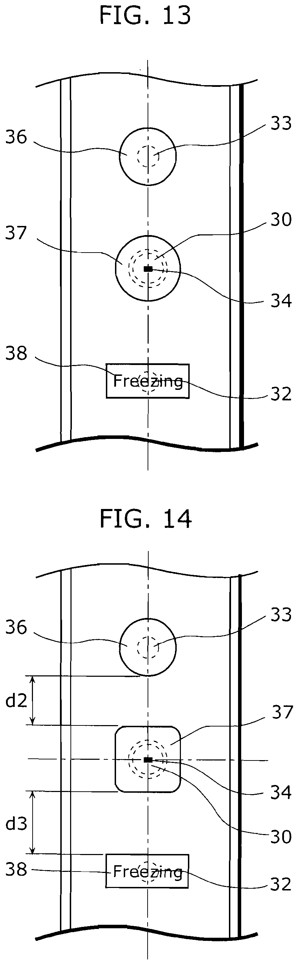

   FIG. 13 is a front view of the principle elements of an operation unit cover in a refrigerator according to another embodiment, which is not part of the present invention.
[FIG. 14]
   FIG. 14 is a front view of the principle elements of an operation unit cover in a refrigerator according to another embodiment, which is not part of the present invention.
[FIG. 15]

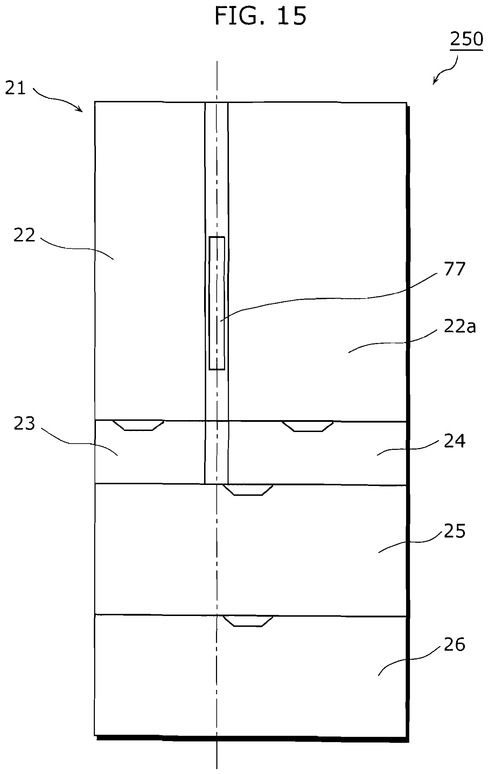

   FIG. 15 is a front view of a refrigerator according to another embodiment, which is not part of the present invention.
[FIG. 16]

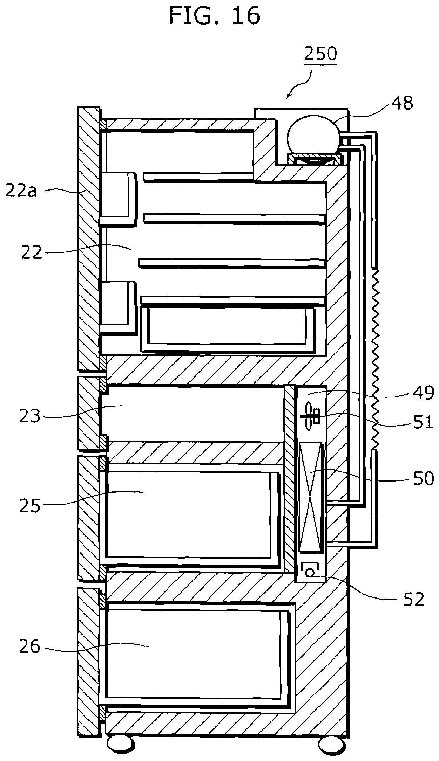

   FIG. 16 is a cross-sectional view of the refrigerator according to another embodiment, which is not part of the present invention.
[FIG. 17]

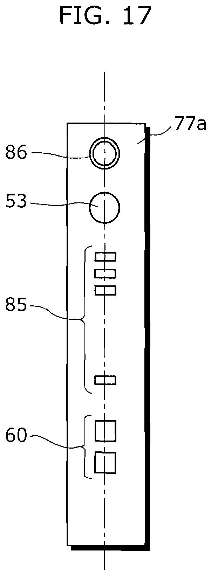

   FIG. 17 is a configuration diagram illustrating an operation board of an operation unit in the refrigerator according to another embodiment, which is not part of the present invention.
[FIG. 18]

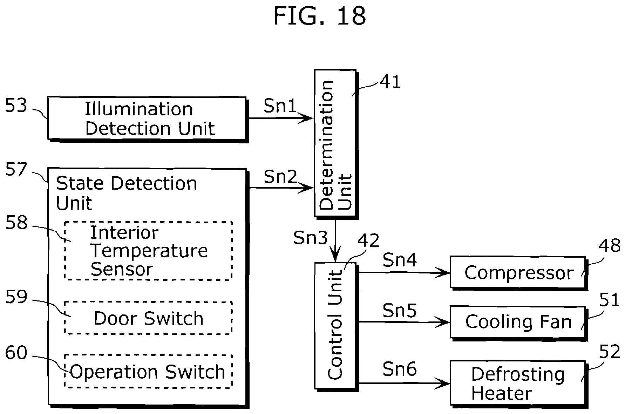

   FIG. 18 is a control block diagram of the refrigerator according to another embodiment, which is not part of the present invention.
[FIG. 19]

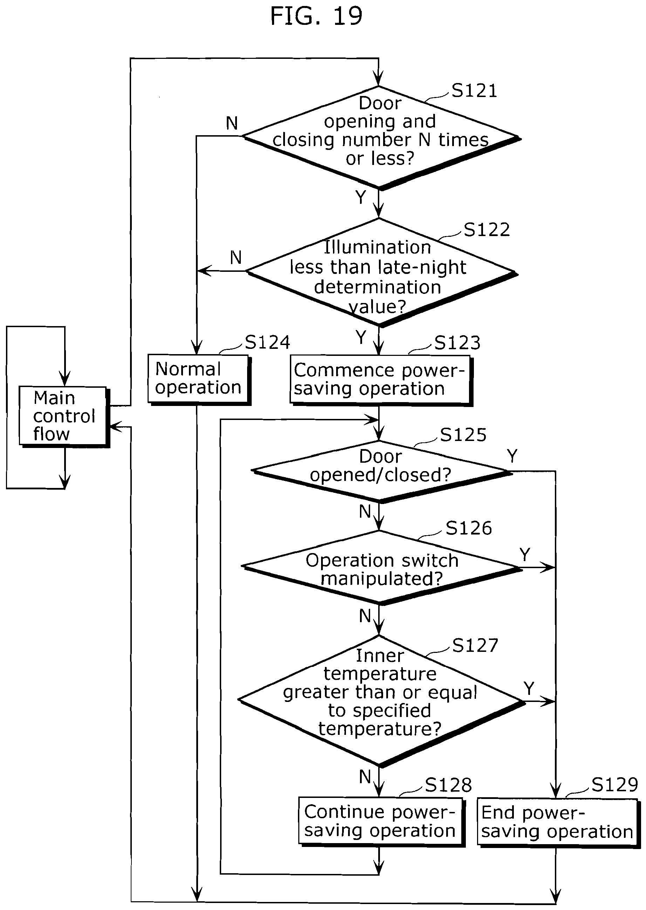

   FIG. 19 is a control flowchart of the refrigerator according to another embodiment, which is not part of the present invention.
[FIG. 20]

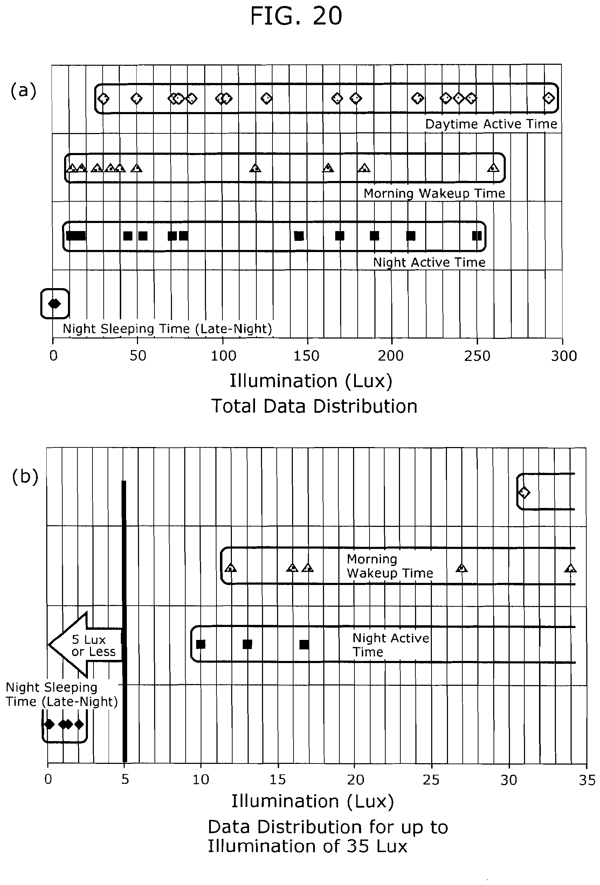

   FIG. 20 is a distribution diagram illustrating monitor data of the surrounding illuminations of the refrigerator according to another embodiment, which is not part of the present invention.
[FIG. 21]

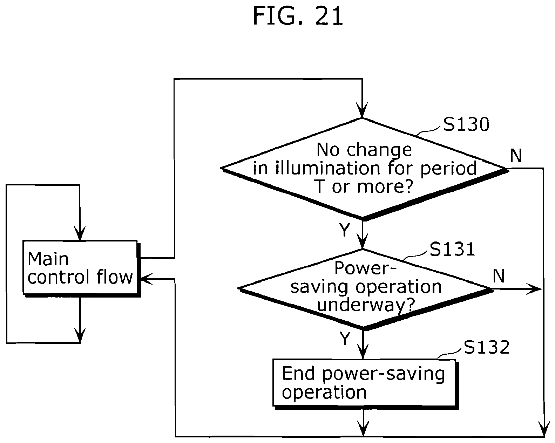

   FIG. 21 is a control flowchart of a refrigerator according to another embodiment, which is not part of the present invention.
[FIG. 22]

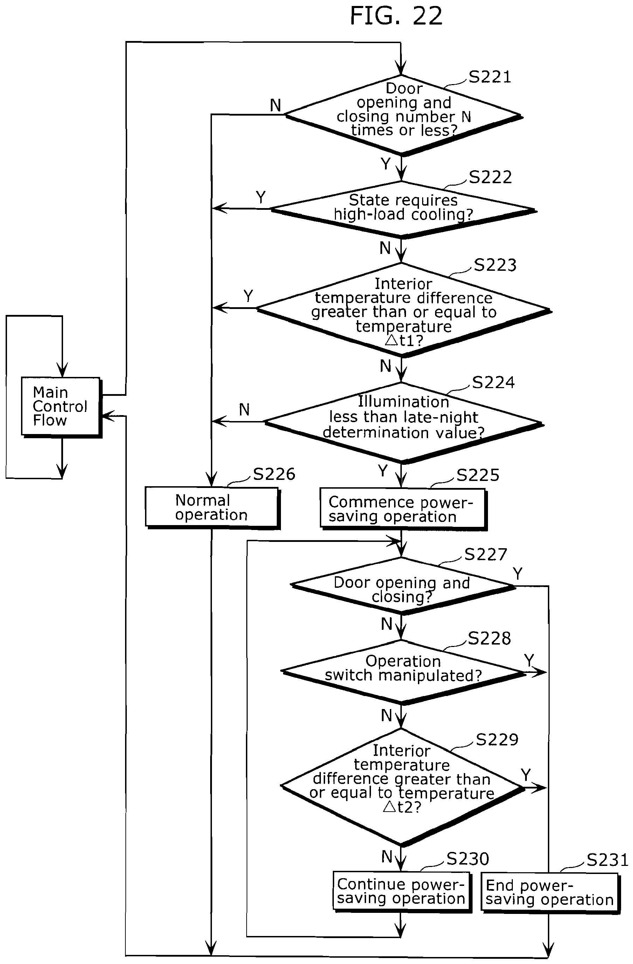

   FIG. 22 is a control flowchart of a refrigerator according to another embodiment, which is not part of the present invention.
[FIG. 23]

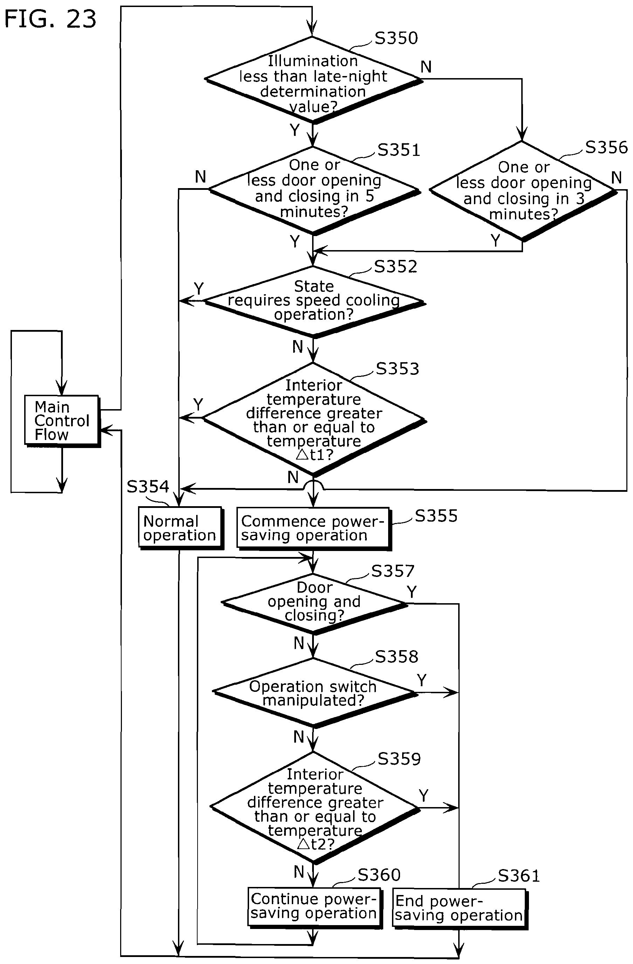

   FIG. 23 is a control flowchart of a refrigerator according to a another embodiment, which is not part of the present invention.
[FIG. 24]
   FIG. 24 is a front view of a conventional refrigerator as disclosed in PTL 1.
[FIG. 25]
   FIG. 25 is an electric circuit diagram illustrating an illumination detection unit in a conventional refrigerator as disclosed in PTL 1.
[FIG. 26]
   FIG. 26 is a control flowchart for operation states in a conventional refrigerator as disclosed in PTL 1.
[FIG. 27]
   FIG. 27 is a side view of a conventional refrigerator as disclosed in PTL 2.

### [Description of Embodiments]

A first invention is a refrigerator provided with a refrigerator main body, and includes: a display unit provided on the front surface of the refrigerator main body to allow a user to confirm operation state information of the refrigerator, the operation state information being information indicating a change in a set temperature or the set temperature; and an illumination detection unit that detects the brightness in the vicinity of the front surface of the refrigerator main body, the illumination detection unit being disposed above the display unit.

According to this configuration, there is a psychological trend whereby the user tends to avoid attaching bills including papers such as memos, flyers, and so on to the front surface of the refrigerator door to in a state where the bill will hide the display unit. For this reason, it is possible to necessarily reduce the likelihood of the illumination detection unit being blocked by bills and the like.

A second invention is a refrigerator includes: an operation unit provided on the front surface of the refrigerator main body; an operation board provided in the operation unit; and an operation switch, provided in the operation board, for changing the set temperature or switching operation modes. The illumination detection unit is disposed above the operation switch.

According to this configuration, it is possible to prevent the illumination detection unit from being blocked by a person's hand when the person manipulates the operation switch. For this reason, erroneous detection of the illumination level can be further prevented.

A third invention is a refrigerator in which the illumination detection unit is disposed in the operation board.

According to this configuration, there is no need for a connection harness between the operation board and the illumination detection unit, and thus the illumination detection unit can be provided using a simpler configuration. Furthermore, because the illumination detection unit is provided in the operation board in which the display unit, operation switch, and so on are provided, there is a psychological trend whereby the user tends to avoid attaching bills including papers such as memos, flyers, and so on to the front surface of the refrigerator door to in a state where the bill will hide the display unit. For this reason, it is possible to necessarily reduce the likelihood of the illumination detection unit being blocked by bills and the like.

A fourth invention is a refrigerator in which the illumination detection unit is disposed above the operation board.

According to this configuration, not only is it possible to reduce the likelihood of the illumination detection unit being blocked by bills or the like, but the illumination detection unit is even higher, and thus the distance between the illuminations detection unit and the lighting fixtures is shorter. As a result, light-blocking caused by obstructions is also reduced, which enables illumination detection to be carried out with high reliability.

A fifth invention is a refrigerator that further includes an operation unit provided on the front surface of the refrigerator main body. The operation unit has a board cover, provided in the operation board, and provided so as to form a board space portion in locations aside from in front of the illumination detection unit, and an operation unit cover provided in front of the board cover; the board cover has higher visual light-blocking properties than the operation unit cover.

According to this configuration, the illumination detection unit receives light from the operation unit cover in front of the illumination detection unit with precedence, rather than from the board cover. For this reason, the light-receiving precision can be improved by suppressing disturbance light, and highly-reliable illumination detection can be carried out.

A sixth invention is a refrigerator that further includes an operation unit provided on the front surface of the refrigerator main body. The operation unit includes a side wall surface provided on at least a side of a light-receiving element, the light-receiving element being a portion of the illumination detection unit that receives light, and a light-receiving unit cover provided in front of the light-receiving element; and the side wall surface has higher visual light-blocking properties than the light-receiving unit cover.

According to this configuration, the illumination detection unit receives light from the front with precedence, rather than from the sides. For this reason, the light-receiving precision can be improved by suppressing disturbance light, and highly-reliable illumination detection can be carried out.

A seventh invention is a refrigerator in which the length of the side wall surface in the direction vertical to the front surface of the light-receiving unit cover is a length that positions the leading edge of the side wall surface on the side opposite to the light-receiving unit cover further back than the light-receiving element.

According to this configuration, disturbance light is prevented from entering from the side directions of the illumination detection unit, and thus light-emitting units for notifications, displays, and so on can be disposed upon the same panel as and adjacent to the illumination detection unit. In other words, flexibility can be achieved in the installation space.

Another embodiment, which is not part of the present invention, is a refrigerator that further includes: a state detection unit that detects the usage state of the refrigerator; a determination unit that determines whether or not to switch between power-saving operation and normal operation based on information from the illumination detection unit and the state detection unit; and a control unit that controls operation of a current-consuming component of the refrigerator in accordance with a signal from the determination unit. After switching from the normal operation to the power-saving operation in accordance with the signal from the determination unit, the control unit cancels the power-saving operation and switches to the normal operation in the case where the determination unit has determined that the user has acted with intent with respect to the refrigerator based on information from the state detection unit.

According to this configuration, the operation mode is not switched based only on the illumination in the vicinity of the installation environment. To be more specific, the illumination detection unit is used primarily for switching to power-saving operation, whereas the state detection unit is primarily used for cancelling power-saving operation and switching to normal operation. Through this, the determination to switch the operation mode is made taking into consideration the usage state of the refrigerator, or in other words, the cooling operation required by the refrigerator, as well. For this reason, power-saving operation can be carried out even in the case where irregular lifestyle pattern states exist, such as when the user is active late at night when the room is in a dark state, when the user is asleep after dawn has broken and the room has become bright due to natural light, and so on, and the operation switch can be carried out with certainty. In other words, higrily-reliable energy conservation control can be carried out.

Another embodiment, which is not part of the present invention, is a refrigerator in which the determination unit determines whether or not it is late at night based on information from the illumination detection unit and determines whether or not the interior temperature of the refrigerator is in a stable state based on information from the state detection unit, and determines to switch from the normal operation to the power-saving operation in the case where it has been determined that it is late at night and that the interior temperature is in a stable state.

According to this configuration, in the case where normal operation is necessary because the temperature fluctuation within the refrigerator is great, power-saving operation is not carried out, even in the case where it has been determined to be late at night based on the illumination detection. Through this, influence on food items due to a rise in the interior temperature can be prevented.

Another embodiment, which is not part of the present invention, is a refrigerator in which the determination unit determines whether or not it is late at night based on information from the illumination detection unit, and changes a power-saving operation commencement condition, which is a condition for commencing power-saving operation, based on the result of the determination.

According to this configuration, power-saving operation is carried out in the case where human activity has stopped, even in the case where the periphery is bright (the case where the user is asleep after dawn has broken and the room is bright due to natural light, the case where the user is away from home, and so on); this makes it possible to realize further energy conservation.

Another embodiment, which is not part of the present invention, is a refrigerator in which the determination unit uses a value of 5 Lux or less as a late-night determination value, the late-night determination value being a threshold for determining whether or not it is nighttime based on information from the illumination detection unit.

According to this configuration, a state in which the room lights are not lit is detected, and thus it can be determined to be late at night, when the user has stopped activities and is sleeping, with certainty.

Another embodiment, which is not part of the present invention, is a refrigerator further including a door that covers the opening of a storage compartment in the refrigerator in a freely openable and closable state; the determination unit determines that the interior temperature of the refrigerator is in a stable state in the case where information indicating that the frequency at which the door is opened and closed is less than a specified number of times is obtained as information from the state detection unit.

According to this configuration, the refrigerator can be determined to be in a stable state in which no warm air from the exterior has entered thereinto based on the frequency of refrigerator door openings and closings. In other words, the interior temperature can be determined to be in a stable state without performing complicated computational processes.

Another embodiment, which is not part of the present invention, is a refrigerator in which the determination unit further determines whether or not to cancel the power-saving operation using only information from the state detection unit, without using information from the illumination detection unit.

According to this configuration, power-saving operation is continued as long as the interior temperature is stable even if the room has become bright due to natural light, and thus it is possible to further improve the actual energy conservation properties.

Another embodiment, which is not part of the present invention, is a refrigerator in which the operation board includes a display is a provided in which the operation the board includes a display light provided with a light source, and the display light is completely extinguished in the case where the illumination detection detects the brightness in the vicinity of the front surface of the refrigerator main body.

According to this configuration, there is no influence from illumination leaking from the display light when detecting the illumination, and thus the illumination level of the surrounding brightness can be detected accurately.

Embodiments of the present invention will be described hereinafter with reference to the drawings. Configurations identical to those in the conventional examples or the embodiments mentioned above are assigned the same reference numerals, and detailed descriptions thereof shall be omitted. Note that the present invention is not limited by this embodiment.

### (First Embodiment)

FIG. 1 is a front view of a refrigerator 100 according to a first embodiment of the present invention.

In FIG. 1, various storage compartment doors are present on the front surface of a refrigerator main body 1. To be more specific, a refrigerating compartment door 2, an ice compartment door 3, a switchable compartment door 4, a freezer compartment door 5, and a vegetable compartment door 6 are laid out in that order from top to bottom. An operation board 7 is disposed in the vicinity of the central portion of the refrigerating compartment door 2.

The operation board 7 includes a display unit 7a for allowing a user to confirm information of the operational state of the refrigerator 100, such as changes in set temperatures, the current set temperature, and so on. This display unit 7a is provided at a height near the eye level of a woman of average height, who is assumed to be a typical user. An illumination detection unit 8 is provided above the display unit 7a, on a line extending from the vertical axis thereof. The illumination detection unit 8 can specifically be configured using a light sensor whose base element is a photodiode, a phototransistor, or the like.

In addition, the illumination detection unit 8 is provided above a center line 2a in the vertical direction of the refrigerating compartment door 2, and, when the refrigerating compartment door to is divided into three parts, or an upper section 2b, a middle section 2c, and a lower section 2d, in the height direction thereof, or in other words, the vertical direction thereof, is provided in the upper section 2b, which is the section that is located at the highest position.

Note that the door layout is merely a representative example, and the layout is not limited to this layout.

The operation and effects of the refrigerator 100 thus configured will be described below.

First, the illumination level of the surroundings of the refrigerator 100 resulting from light irradiated by the sun, room lighting fixtures, or the like is detected by the illumination sensor 8 installed in the front surface of the refrigerator main body 1. The detected illumination level is inputted into a control unit (not shown) of the refrigerator main body 1, and if that level is lower than a predetermined specified value, it is determined that it is nighttime or that there is no human activity, and the operation of the refrigerator 100 is switched to a power-saving operation operational mode (also called a "power-saving mode" hereinafter), in which the cooling performance is slightly decreased. In the case where the illumination level has increased beyond the specified value, the refrigerator is returned to normal mode.

If the light-receiving surface of the illumination detection unit 8 is blocked at this time, accurate illumination detection becomes impossible, and thus it is not possible to switch to the power-saving mode and return to the normal mode. Paper or the like being attached to the front surface of the refrigerating compartment door 2 can be thought of as a typical cause of such light blocking. However, in the present embodiment, the illumination detection unit 8 is installed above the display unit 7a provided in the operation board 7 on the vertical axis thereof, where it is highly unlikely that paper or the like will be attached. As a result, erroneous illumination detection is not carried out.

To rephrase, the display unit 7a is provided at a height near the eye level of a woman of average height, who is assumed to be a typical user, and thus the illumination detection unit 8 is provided in an area that is higher than height of the eye level of a woman of average height. For this reason, the likelihood that light will be blocked in the case where a user stands in front of the refrigerator can be reduced.

In addition, by providing the illumination detection unit 8 directly above the display unit 7a included in the operation board 7, there is a psychological trend whereby the user tends to avoid attaching bills to the front surface of the refrigerating compartment door 2 in a state where the paper will hide the display unit 7a. Through this, it is possible to reduce the likelihood of the illumination detection unit 8, which is necessarily provided directly above the operation board 7, being blocked by bills and the like.

"Directly above the display unit 7a" as referred to in the present invention does not necessarily have to be an area that is adjacent to the display unit 7a. This may be considered to be a dimension whereby the display unit 7a is, at the very least, not hidden in the case where a bill is attached in the front area of the illumination detection unit 8. For example, considering that the dimension of a typical flyer or the like is 30 cm, "directly above" is defined as a region within 30 cm in the upward direction from the upper end of the display unit 7a. Meanwhile, as "directly above", it is preferable for the illumination detection unit 8 to be provided within 15 cm above the upper end of the display unit 7a, which enters the user's field of vision in a state where the user checks the display unit 7a. Doing so makes it possible to psychologically prompt the user to be more diligent about avoiding attaching bills to that area.

In addition, the illumination detection unit 8 is provided above the center line 2a in the vertical direction of the refrigerating compartment door 2, and, when the refrigerating compartment door 2 is divided into three parts, or an upper section 2b, a middle section 2c, and a lower section 2d, in the height direction thereof, is provided in the upper section 2b, which is the section that is located at the highest position. Through this, it is possible to reduce the likelihood of light being blocked in the aforementioned case where the user stands in front of the illumination detection unit 8, and reduce the likelihood of the illumination detection unit 8 being blocked by bills or the like.

In addition, providing the illumination detection unit 8 in a higher area of the refrigerator 100 in this manner raises the illumination detection unit 8, which reduces the distance to lighting fixtures. As a result, the likelihood of light-blocking caused by obstructions is also reduced, which enables illumination detection to be carried out with high reliability.

To rephrase, in the installation environment of a refrigerator in a typical household, lighting fixtures are installed near the ceiling of a room (or a kitchen), which is located higher above the refrigerator. For this reason, when, for example, detecting the extinguishment of the lighting fixtures in the case where the user is absent, detecting the lighting of the lighting fixtures in the case where the user is nearby, and so on, providing the illumination detection unit 8 in the vicinity of the illumination makes it possible to improve the precision of the illumination detection that is based on the lighting fixtures of the room.

Furthermore, providing a notification unit, which notifies the user that illumination detection is underway using an LED illumination or the like, a display that promotes the environmental operation, or the like in the vicinity of the illumination detection unit 8 is also useful for reducing the likelihood of the aforementioned light-blocking. Providing, for example, an area in which text reading "eco" is printed, depicting a graphic that expresses an association with environmental operation, or the like can be considered as such a display that promotes the environmental operation. These methods are useful when promoting such environmental operation to consumers, who recently have a strong consciousness towards energy conservation.

As described thus far, in the present embodiment, the illumination detection unit 8 is provided above the display unit 7a provided in the operation board 7, on the vertical axis thereof. It is thus possible to eliminate causes of external disturbances due to paper being attached in a manner that covers the illumination detection unit 80, the blocking of light from lighting fixtures, and so on, and thus the execution of a power-saving mode based on highly-precise illumination detection can be realized.

Note that in the present embodiment, the illumination detection unit 8 is provided on a vertical axis above the display unit 7a provided in the operation board 7. However, in consideration of the size of flyers and the like, the illumination detection unit 8 does not necessarily need to be provided on the vertical axis. For example, considering that the dimension of a typical flyer or the like is 30 cm, a range within 30 cm in the left and right directions from the vertical axis is a dimension whereby the display unit 7a will be hidden in the case where a bill is attached in front of the illumination detection unit 8, and thus it is possible to prompt the user to avoid attaching bills. More preferably, providing the illumination detection unit 8 within 15 cm above, which enters the user's field of vision in the case where the user checks the display unit 7a, makes it possible to psychologically prompt the user to be more diligent about avoiding attaching bills to that portion.

Note that in FIG. 1, which is a drawing corresponding to the present embodiment, the refrigerating compartment door 2 is a French-style door; however, the style of the door is not limited thereto. It goes without saying that the same technical spirit can be applied using any door that covers the opening of the refrigerating compartment in a freely openable and closable manner, such as a single-swinging door.

### (Second Embodiment)

FIG. 2 is a configuration diagram illustrating an operation board of a refrigerator 100 according to a second embodiment of the present invention.

In the present embodiment, detailed descriptions of portions that are the same as those in the configuration of the refrigerator 100 of the aforementioned first embodiment shall be omitted. In addition, the present embodiment describes a different form of the configurations of the operation board 7 that includes the display unit 7a and the illumination detection unit 8 of the first embodiment, and with respect to the configuration of the refrigerator 100, the installation configuration of the illumination detection unit 8, and the effects thereof in the first embodiment, the same technical spirit can be applied.

In FIG. 2, multiple operation switches 9 for adjusting the set temperature, switching between operation modes, and so on are provided in the lower portion of the operation board 7. Multiple display lights 10 that are configured of, for example, LEDs, which are light sources, and which display states set using the operation switches 9, are disposed above the operation switches 9. The display lights 10 irradiate light in order to display text, graphics, or the like in the display unit 7a. Furthermore, the illumination detection unit 8 is disposed above the display lights 10. In other words, the illumination detection unit 8 is disposed upon the single panel that is the operation board 7, along with the operation switches 9 and the display lights 10.

In this manner, in the present embodiment, the illumination detection unit 8 and the operation board 7 are configured as a single unit.

Operations and effects of a refrigerator 100 according to the second embodiment configured as described above will be described hereinafter.

In the present embodiment, the operational switches 9, display lights 10, and illumination detection unit 8 are provided in the operation board 7, which is a single panel.

The illumination detection unit 8 is positioned at least above the operation switches 9. That is, the illumination detection unit 8 is disposed above the operation switches 9, which a user manipulates using his/her hands. Through this, it is possible to psychologically prompt the user to avoid attaching bills to that area. As a result, it is possible to prevent the illumination detection unit 8 from being blocked due to operations performed by the user, and it is thus possible to eliminate operational problems caused by erroneous illumination detections.

In other words, by providing the operational switches 9, which are included in an operation unit provided on the front surface of the refrigerator 100 and used for confirming and changing the set temperature and so on, and which are manipulated by being touched by the user, below the display lights 10 and the illumination detection unit 8, it is possible to achieve an effect of further preventing the illumination detection unit 8 from being blocked due to user operations without the display unit 7a being blocked by the user's hand, even in the case where the user is manipulating the operation switches 9.

Furthermore, by providing a notification unit, which notifies the user that illumination detection is underway using an LED illumination or the like in the vicinity of the illumination detection unit 8, and furthermore providing the illumination detection unit 8 directly above and adjacent to the notification unit, makes it possible to promote the fact that illumination detection is being carried out to the user in a more effective manner. Doing so makes it possible to greatly reduce the likelihood of light-blocking caused by attached bills and the like.

In addition, by configuring the illumination detection unit 8 and the operation board 7 as a single unit, there is a psychological trend whereby the user tends to avoid attaching a bill to the front surface of the refrigerating compartment door to in a state where the bill will hide the display unit 7a that displays temperature settings and the like of the storage compartments in the operation board 7 that includes the operation switches 9. For this reason, it is possible to reduce the likelihood of the illumination detection unit 8, which is necessarily provided directly above the operation board 7, being blocked by bills and the like. Furthermore, there is no need for a connection harness between the operation board 7 and the illumination detection unit 8, and thus the illumination detection unit 8 can be provided using fewer resources and with a simple configuration.

### (Third Embodiment)

FIG. 3 is a control flowchart of illumination detection in a refrigerator 100 according to a third embodiment of the present invention.

In the present embodiment, detailed descriptions shall be omitted for portions for which the same configuration and same technical spirit as the configuration of the refrigerator 100 according to the aforementioned first and second embodiments can be applied.

In addition, the present embodiment describes a control method for the illumination detection unit 8 disclosed in the first and second embodiments, and with respect to the configuration of the refrigerator 100, the installation configuration of the illumination detection unit 8, and the effects thereof in the aforementioned first and second embodiments, the same technical spirit can be applied.

Hereinafter, a flow of processing regarding illumination detection in the refrigerator 100 shall be described using FIG. 3.

First, when, in an operational state according to a main control flow, it is determined whether to carry out illumination detection using the illumination detection unit 8 (S11), the logic is advanced to S12 in the case where detection is to be carried out (YES in S11), whereas the logic is returned to the main control flow when such is not the case (NO in S11). Next, in S12, it is determined whether or not the display lights 10 are lit. If the display lights 10 are lit (Yes in S12), the logic is advanced to S13, where the display lights 10 are extinguished; however, if the display lights 10 are extinguished, the logic is advanced to S14. Then, in S14, illumination detection is carried out by the illumination detection unit 8, and the logic is returned to the main control flow.

Note that the various types of determination performed in this series of processes are carried out by, for example, the control unit that controls the operation of the refrigerator 100 (for example, a microcomputer).

As described above, according to the present embodiment, in the case where illumination detection is carried out by the illumination detection unit 8, the display lights 10 are completely extinguished; thus illumination leaking from the display lights 10 is not erroneously detected, which makes it possible to carry out an accurate illumination detection.

### (Fourth Embodiment)

In the present embodiment, detailed descriptions shall be omitted for portions for which the same technical spirit as the configuration of the refrigerator 100 according to the first and second embodiments can be applied.

FIG. 4 is a front view of a refrigerator 100 according to a fourth embodiment of the present invention. FIG. 5 is a diagram illustrating an A-A cross-section of FIG. 4.

As shown in FIG. 4, various storage compartment doors are present on the front surface of a refrigerator main body 1. To be more specific, a refrigerating compartment left door 12a and a refrigerating compartment right door 12b, which make up a French-style, or in other words, a French door, an ice compartment door 3, a switchable compartment door 4, a freezer compartment door 5, and a vegetable compartment door 6 are laid out in that order from top to bottom. The surface of each door is made of metal, and thus bills and the like can be attached thereto using a magnet.

In addition, an operation board 7 is disposed on the left side of the refrigerating compartment right door 12b, or in other words, in the vicinity of the joint area at the border with the refrigerating compartment left door 12a. An illumination detection unit 8 is provided above the operation board 7, on a line extending from the vertical axis thereof. The illumination detection unit 8 can specifically be configured using a light sensor whose base element is a photodiode, a phototransistor, or the like.

Next, as shown in FIG. 5, a left door gasket 20a is disposed on an end surface of the refrigerating compartment left door 12a, whereas a right door gasket 20b is disposed on an end surface of the refrigerating compartment right door 12b. Through this, the refrigerator has a secure airtight configuration when both of the French doors (the refrigerating compartment left door 12a and the refrigerating compartment right door 12b) are closed.

A concavity is provided in the left side end portion of the refrigerating compartment right door 12b, which is the larger of the left and right doors; the operation board 7, in which the illumination detection unit 8 is installed, is housed within that concavity, and the operation board 7 is anchored using a board cover 14. A board cover side wall surface 14a is provided in the board cover 14. The board cover side wall surface 14a is configured so as to surround the entire periphery of the illumination detection unit 8, to prevent light from advancing to the illumination detection unit 8 from the side surfaces, and so as to have an open portion above the illumination detection unit 8.

In addition, an operation unit cover 19 is provided in the upper portion of the board cover 14. The operation unit cover 19 is attached to the refrigerating compartment right door 12b in a manner so as to cover the entire surface of the board cover 14 on the side of the door, or to rephrase, so as to seamlessly cover the board cover 14 in the vertical direction on the left side end portion of the refrigerating compartment right door 12b, which is the larger of the left and right doors.

A light-receiving unit cover 13, configured of a material that allows visible light wavelengths to pass therethrough, is provided in the operation unit cover 19 in front of the illumination detection unit 8. The illumination detection unit 8 detects illumination in the periphery of the refrigerator 100 through this light-receiving unit cover 13. The operation unit cover 19 and the light-receiving unit cover 13 are configured of a resin, and are configured so that magnets cannot adhere thereto.

Furthermore, as shown in FIG. 5, the operation unit cover 19 is disposed so as to protrude beyond the plane of the refrigerating compartment right door 12b in a convex shape, and operation unit cover tapered portions 19a are provided on both sides of the surface thereof.

In this manner, the illumination detection unit 8 is provided in a location having a convex shape protruding beyond the doors of the refrigerating compartment, and in the present embodiment, the operation unit cover 19 is formed in the location that has this convex shape.

Note that the layout of the storage compartments aside from the refrigerating compartments is exemplary, and the storage compartments are not limited to this layout.

The operation and effects of the refrigerator 100 thus configured will be described below.

First, the illumination level of the surroundings of the refrigerator 100 resulting from light irradiated by the sun, room lighting fixtures, or the like is detected by the illumination sensor 8 installed in the front surface of the refrigerator main body 1, through the light-receiving unit cover 13. The detected illumination level is inputted into a control unit (not shown) of the refrigerator main body 1, and if that level is lower than a predetermined specified value, it is determined that it is nighttime or that there is no human activity, and the operation of the refrigerator 100 is switched to a power-saving mode, in which the cooling performance is slightly decreased. In the case where the illumination level has increased beyond the specified value, the control unit returns the refrigerator to a normal mode.

If the light is blocked from advancing to the light-receiving surface of the illumination detection unit 8, or in other words, to the light-receiving unit cover 13, an accurate illumination detection becomes impossible, and thus it is not possible to switch to the power-saving mode and return to the normal mode with proper precision.

Flyers, papers with notices, and other such documents being attached by the user to the surface of the metallic doors using magnets or the like during the actual use of the refrigerator 100 can be thought of as a cause of light-blocking. With the configuration according to the present embodiment, attaching a bill 18, which is a paper or the like, to the front surface of the refrigerating compartment left door 12a or the front surface of the refrigerating compartment right door 12b, both of which are metallic surfaces, can be considered.

However, in the present embodiment, the illumination detection unit 8 is provided in an area above the operation board 7, through which the user sets the temperature and the like of the storage compartments. For this reason, it is assumed that the likelihood of the bill 18 being attached by the user to the front side of the operation board 7, or in other words, in a position where the operation board 7 cannot be seen, is low. In other words, the likelihood of a bill being attached in a manner that covers the front of the illumination detection unit 8 provided above the operation board 7 can be reduced, and thus it is possible to prevent a drop in the detection precision of the illumination detection unit 8.

In addition, with the refrigerator 100 having a French-door configuration in which a left and right French doors open, as in the present embodiment, even in the case where the bill 18 has been attached to the front surface of the refrigerating compartment left door 12a or the refrigerating compartment right door 12b, which are the left and right doors, there is the possibility that the bill 18 will be caught due to the doors opening and closing if that bill 18 is attached so as to be positioned in front of a left/right door joint portion 17, which is the portion where the left and right doors join. Accordingly, doors join. Accordingly, it is highly likely that the user will attach the bill 18 in a position aside from the left/right door joint portion 17.

In this manner, the likelihood that the bill 18 will be attached on the left/right door joint portion 17 is extremely low, and therefore the likelihood that the bill 18 will be attached in front of the illumination detection unit 8 is also low. For this reason, it is possible to prevent a decrease in the detection precision of the illumination detection unit 8.

In this manner, the operation unit is provided in the vicinity of the border at which the French-type doors open and close (in the present embodiment, the left/right door joint portion 17). For this reason, in the case where the bill 18 has been attached so as to span across this border, it is essentially impossible to freely open and close the doors. Accordingly, it is possible to greatly reduce the likelihood of the user attaching the bill 18 in this area. As a result, the likelihood of the light-receiving cover 13 being blocked due to the bill 18 being attached in front of the illumination detection unit 8 is extremely low.

Furthermore, in the present embodiment, the operation unit cover 19 has a convex shape protruding beyond the plane of the refrigerating compartment right door 12b, and thus it is difficult to attach paper to the light-receiving unit cover 13. Further still, because the operation unit cover 19 is provided with the operation unit cover tapered portions 19a, even if the bill 18 has been attached to the door, the bill 18 is pushed up in the direction moving away from the front surface of the door of the refrigerator 100 (in FIG. 5, the front surface of the refrigerating compartment right door 12b), thereby preventing the light-receiving unit cover 13 from being completely blocked.

As described thus far, in the present embodiment, the illumination detection unit 8 is provided above the operation board 7 on the vertical axis thereof, and is provided in the refrigerating compartment right door 12b in the vicinity of the border with the refrigerating compartment left door 12a. Furthermore, the operation unit cover 19 is provided in a convex shape protruding from the surface of the door, and the operation unit cover tapered portions 19a are provided on both ends of the operation unit cover 19. Through this, it is possible to eliminate causes of external disturbances such as attaching paper to the doors of the refrigerator 100, the blocking of light from lighting fixtures, and so on, and thus the execution of a power-saving mode based on highly-precise illumination detection can be realized.

Note that in the present embodiment, the illumination detection unit 8 is provided in the larger of the left and right doors (the refrigerating compartment right door 12b). However, it is of course possible to provide the illumination detection unit 8 in the smaller of the left and right doors, regardless of the size of the doors. Furthermore, it is of course also possible to apply the same technique to French-type doors in which the dimensions of the left and right doors are identical. In this case, which of the left and right doors to provide the illumination detection unit 8 in may be determined as appropriate having designed the various capacities of the refrigerator.

### (Fifth Embodiment)

A refrigerator 200 whose characteristic is in the installation location and installation structure of an illumination detection unit will be described as a fifth embodiment.

Note that the refrigerators 200 of the sixth through ninth embodiments described later also respectively have characteristics in the installation location and installation structure of an illumination detection unit.

First, multiple refrigerator inventions related to the fifth through ninth embodiments will be described.

A first invention is a refrigerator including: a refrigerator main body; an operation board having an operation unit provided on the front surface of the refrigerator main body, and the operation unit having an illumination detection unit; a board cover, provided in the operation board, and provided so as to form a board space portion in locations aside from in front of the illumination detection unit; and an operation unit cover provided in front of the board cover; the board cover has higher visual light-blocking properties than the operation unit cover. The board cover has higher visual light-blocking properties than the operation unit cover.

According to this configuration, the illumination detection unit receives light from the operation unit cover in front of the illumination detection unit with precedence, rather than from the board cover. For this reason, the light-receiving precision can be improved by suppressing disturbance light, and highly-reliable illumination detection can be carried out.

A second invention is a refrigerator including: a refrigerator main body; and an operation unit provided on the front surface of the refrigerator main body and provided with an illumination detection unit. The operation unit includes a side wall surface provided on at least a side of a light-receiving element, the light-receiving element being a portion of the illumination detection unit that receives light, and a light-receiving unit cover provided in front of the light-receiving element; and the side wall surface has higher visual light-blocking properties than the light-receiving unit cover.

According to this configuration, the illumination detection unit receives light from the front with precedence, rather than from the sides. For this reason, the light-receiving precision can be improved by suppressing disturbance light, and highly-reliable illumination detection can be carried out.

A third invention is a refrigerator in which part of the operation unit cover is particularly formed as a component having a high transmissibility with respect to visible light, and that part is configured as the light-receiving unit cover.

According to this configuration, it is not necessary to use a separate component for the light-receiving unit cover, and part of the operation unit cover is used as the light-receiving unit cover. This makes it possible to achieve a reduction in costs, and makes it possible to achieve a reduction in assembly processes due to the simplified structure.

A fourth invention is a refrigerator in which the length of the side wall surface of the board cover upon the vertical axis of the light-receiving unit cover of particularly the first or second invention is extended more toward the operation unit than the position within the illumination detection unit that the light-receiving element extends to.

According to this configuration, disturbance light is prevented from entering from the side directions of the illumination detection unit, and thus light-emitting units for notifications, displays, and so on can be disposed upon the same panel as and adjacent to the illumination detection unit. In other words, flexibility can be achieved in the installation space.

A fifth invention is a refrigerator in which an antireflective portion is provided in the operation board of the operation unit in which the illumination detection unit particularly of one of the first through third inventions is installed, and in the surface thereof surrounding the area where the illumination detection unit is installed.

According to this configuration, erroneous illumination detection caused by disturbance light from the gap between the side wall surface of the board cover and the operation board or irregular reflections in the light received through the light-receiving unit cover is prevented, thus making it possible to carry out precise illumination detection.

A sixth invention is a refrigerator in which the light-receiving unit cover is disposed upon a surface approximately vertical to the front surface of the refrigerator main body of particularly one of the first through fourth inventions.

According to this configuration, the buildup of grime such as dust, oil, or the like is suppressed, making it possible to prevent the illumination detection unit from being blocked; this makes it possible to further prevent erroneous detections of illumination levels.

A seventh invention is a refrigerator in which the light-receiving surface of the light-receiving unit cover is provided within a directionality angle whereby the illumination detection sensitivity of the illumination detection unit of particularly one of the first through fifth inventions is greater than or equal to 50%.

According to this configuration, fluctuation in the level of the detected illumination can be suppressed to a minimum with respect to positional skew rising during the assembly process of the light-receiving unit cover and the illumination detection unit; the illumination detection can thus be carried out with extremely high precision, and it is thus possible to carry out highly-reliable illumination detection.

The fifth embodiment of the present invention will be described hereinafter with reference to the drawings. Configurations identical to those in the conventional examples or the embodiments mentioned above are assigned the same reference numerals, and detailed descriptions thereof shall be omitted. Note that the present invention is not limited by this embodiment.

FIG. 6 is a front view of a refrigerator according to the fifth embodiment of the present invention. FIG. 7 is a configuration diagram of a display unit in the refrigerator according to the fifth embodiment. FIG. 8 is a detailed cross-sectional view of the periphery of a display unit of the refrigerator according to the fifth embodiment (a cross-sectional view along the A-A line in FIG. 7). FIG. 9 is a cross-sectional view of the principle elements in the periphery of the illumination detection unit of the refrigerator according to the fifth embodiment. FIG. 10 is a diagram illustrating directional properties of the illumination detection unit of the refrigerator according to the fifth embodiment.

As shown in FIGS. 6 and 7, the refrigerator 200 according to the fifth embodiment includes a refrigerator main body 21. The refrigerator main body 21 includes a refrigerating compartment 22, an ice compartment 23, a switchable compartment 24, a freezer compartment 25, and a vegetable compartment 26 laid out in that order from the top down. An operation unit cover 27 is disposed in the vicinity of the central portion of a refrigerating compartment door 22a of the refrigerating compartment 22, and an operational unit 28 is housed within the operation unit cover 27. Note that the layout of the storage compartments is exemplary, and the storage compartments are not limited to this layout.

A notification light 33 that provides a notification of the operation mode, an illumination detection unit 30, multiple display lights that display states set by a user, and multiple operation switches 31 for adjusting the set temperature, switching operation modes, and so on are disposed in the operation unit 28 in that order from the top down, upon a line 29a extending from the vertical axis of an operation board 29. These elements are disposed in the operation board 29, which is a single panel.

The illumination detection unit 30 can specifically be configured by using a light sensor including a light-receiving element 34, such as a photodiode or phototransistor, therein. Meanwhile, the notification light 33 and the display lights 32 can specifically be configured using light-emitting diodes (LEDs).

Next, as shown in FIG. 8, the operation board 29 is anchored using multiple board cover claw portions 39a provided in a board cover 39, and furthermore, the board cover 39 is held snugly against the operation unit cover 27. Multiple board cover side wall surfaces 39b of the board cover 39 are disposed at least on the side surfaces of the light-emitting element 34, and form constant board space portions 39c extending from the notification light 33, the illumination detection unit 30, and the display lights 32, respectively, in the forward direction as far as the operation unit cover 27, thereby surrounding those elements so as to restrict the distance between the operation unit cover 27 and the operation board 29 to a constant interval. This achieves a configuration whereby disturbance light such as light emitted from the side surface directions of the light-receiving element 34 does not reach the light-receiving element 34.

Such a configuration whereby disturbance light does not reach the light-receiving element 34 is employed because the illumination detection unit 30 according to the present embodiment is intended to improve the detection precision particularly in cases where it is dark. In, for example, the case where the detection precision is to be improved in the case where the surroundings are bright, a configuration that allows more light to enter so as to detect even a slight increase in the brightness is employed, and thus requires a different configuration with respect to at least the necessity to increase the light-blocking properties of the board cover 39, as in the present invention.

In this manner, increasing the light-blocking properties of the board cover 39 as a method for improving the detection precision in darkness makes it possible to accurately determine whether or not it is late at night. For example, in the case where an illumination of less than 5 Lx is determined as late at night, it can be determined that the user has stopped his/her activity and is asleep in the case where it has been determined that it is late at night. Accordingly, by switching to power-saving operation based on a certain determination that it is late at night, it is possible to provide a refrigerator 200 that realizes further energy conservation.

Meanwhile, a notification light cover 36 is provided in the operation unit cover 27 in the area where the notification light 33 emits light. Similarly, a light-receiving unit cover 37 is provided in the operation unit cover 27 in the area where the illumination detection unit 30 receives light. Furthermore, an operation unit cover transparent portion 38 is provided in the operation unit cover 27 in the area where the display lights 32 emit light. In addition, an antireflective portion 35 that absorbs visible light is disposed in the surface of the operation board 29 surrounding the portion in which the illumination detection unit 30 is installed.

The operation and effects of the refrigerator 200 thus configured will be described below.

First, when light is irradiated onto the operation unit cover 27 provided in the front surface of the refrigerator main body 21 by the sun, room lighting fixtures, or the like, visible light that has passed through the light-receiving unit cover 37, which has a higher light transmissibility than the operation unit cover 27, or in other words, has low light-blocking properties, is received by the illumination detection unit 30. The board cover side wall surfaces 39b, which have high light-blocking properties, or in other words, have low light transmissibility, and which are provided around the periphery of the illumination detection unit 30, extend toward the operation unit 28 beyond the position of the light-receiving element 34 within the illumination detection unit 30.

In other words, the length of the board cover side wall surfaces 39b in the direction vertical to the front surface of the light-receiving unit cover 37 is a length that positions the leading edges of the board cover side wall surfaces 39b on the side opposite to the light-receiving unit cover 37 further back than the light-receiving element 34.

Through this, the board cover side wall surfaces 39b prevent visible light from entering from side areas aside from the light-receiving unit cover 37, which is in the front.

Furthermore, the operation unit cover 27 is configured of a material having a lower visible light transmissibility than the light-receiving unit cover 37, and thus light is prevented from entering from the periphery of the light-receiving unit cover 37 as well. A half-mirror configuration, a smoke-effect material, or the like may be used as the specific material for the operation unit cover 27. Although the operation unit cover 27 and the light-receiving unit cover 37 are configured from individual components in FIG. 8, the transmissibility of part of the operation unit cover 27 may be increased and that portion used as the light-receiving unit cover 37 instead.

In addition, the board cover side wall surfaces 39b are provided at least on the sides of the light-receiving element 34, and have a lower light transmissibility than the operation unit cover 27, or in other words, have high light-blocking properties. Through this, visible light is prevented from reaching the light-receiving element 34 from the sides with certainty.

In addition, an antireflective portion 35 is disposed in the surface of the operation board 29 surrounding the portion in which the illumination detection unit 30 is installed. Through this, irregular reflections in the space of the light-receiving area, light entering through a gap between the board cover side wall surfaces 39b and the operation board 29, and so on is absorbed. The antireflective portion 35 can easily be configured by silk-screen printing using black ink, which absorbs visible light wavelengths.

Then, in such a configuration, the illumination level detected by the illumination detection unit 30 is inputted into a control unit (not shown) provided in the refrigerator main body 21, and if the illumination level is lower than a predetermined specified value, the control unit determines that it is nighttime or that there is no human activity, and switches the refrigerator 200 to the power-saving mode, in which the performance of the cooling operations is slightly reduced.

At this time, the notification light 33 is lit or extinguished, thereby notifying the user of the power-saving operation state through the notification light cover 36. Because it is often the case that it is nighttime and the user is asleep when power-saving operation is underway, it is preferable for the notification light 33 to emit the minimum amount of light, dim the light using the notification light cover 36, and so on. Next, in the case where, for example, the illumination level has increased beyond the specified value, the control unit returns the refrigerator to operation in the normal mode, and extinguishes the notification light 33.

Next, the relationship between the illumination detection unit 30 and the light-receiving unit cover 37 will be described in further detail using FIGS. 9 and 10.

A light sensor that uses a photodiode as its light-receiving element 34 is a representative example of the illumination detection unit 30, and it is typical for the light-receiving sensitivity thereof to have directional properties as shown in FIG. 10. As shown in FIG. 10, the horizontal direction, or in other words, the position where an angle α is ± 0°, has the highest sensitivity, and thus the light-receiving cover 37 is disposed so that that direction is vertical relative to the surface thereof. The properties are such that the sensitivity decreases as the angle α increases, and when the angle reaches 60°, the sensitivity has decreased by half, to 50%.

In the present embodiment, as shown in FIG. 9, care is taken to provide the light-receiving surface of the light-receiving unit cover 37 within a directionality range whereby the angle α is greater than or equal to 60°, or in other words, whereby the sensitivity is greater than or equal to 50%, so that light can be received effectively at the minimum required size.

As described thus far, in the present embodiment, the light-receiving unit cover 37 is provided in the area of the operation unit cover 27, which is in turn provided in the front surface of the refrigerator main body 21, where the illumination detection unit 30 receives light. Furthermore, the light-blocking properties of the operation unit cover 27 are increased more than those of the light-receiving unit cover 37 with respect to visual light. Through this, the illumination detected by the illumination detection unit 30 is controlled by how light is received through the light-receiving unit cover 37, thereby eliminating disturbance light passing through the operation unit cover 27, and making highly-reliable illumination detection possible.

By employing such a configuration in which it is difficult for disturbance light to enter, it is possible to improve the detection precision of the illumination detection unit 30, particularly in cases of darkness, and thus it is possible to precisely determine whether or not it is nighttime. For example, in the case where an illumination of less than 5 Lx is determined as nighttime, it can be determined that the user has stopped his/her activity and is asleep in the case where it has been determined that it is nighttime. Accordingly, by switching to power-saving operation based on a certain determination of nighttime, it is possible to provide a refrigerator 200 that realizes further energy conservation.

The basis for this late-night determination based on less than 5 Lx is not fulfilled in the case where, for example, window curtains have simply been closed during the daytime. By using such a basis, a case in which all of the shutters have been closed and the state is one of total darkness can also be detected. In other words, this basis takes into consideration not only the darkness of when it is late at night, but also situations in which the user is not at home and has closed all of the shutters; through this, darkness can be detected with precision, and thus it is possible to accurately ascertain that the user is in an inactive state.

Furthermore, the illumination detection unit 30 according to the present embodiment is capable of detecting cases of darkness with precision, and thus even in the case where, for example, the illumination detection unit 30 has been blocked by a memo, a flyer, or the like being attached in front of the illumination detection unit 30 by the user, other obstructions, and so on, it will not be determined to be late at night under normal circumstances of attachment, aside from cases where the illumination detection unit 30 has been securely blocked by an extremely thick piece of paper. Through this, influence caused by such external disturbances can be prevented, and the execution of the power-saving mode based on a highly-precise illumination detection can be realized.

In addition, in the configuration according to the present embodiment, for example, part of the operation unit cover 27 can be a component having a high transmissibility with respect to visual light, and that part can be used as the light-receiving unit cover 37. In this case, it is unnecessary to use a different component as the light-receiving unit cover 37, and the light-receiving unit cover 37 is formed as an integral component with the operation unit cover 27, which reduces costs and simplifies the structure.

In addition, in the present embodiment, the lengths of the board cover side wall surfaces 39b upon the vertical axis from the light-receiving unit cover 37 extend toward the operation board 29 beyond the position of the light-receiving element 34 within the illumination detection unit 30. Through this, the advancement of light to the illumination detection unit 31 when the display lights 32, notification light 33, and so on emit light is regulated by the board cover side wall surfaces 39b. For this reason, the illumination detection unit 30, display lights 32, and notification late 33 can be disposed near each other upon the operation board 29, which not only makes it possible to minimize the amount of space required, but also makes it possible to concentrate the necessary configuration for power-saving operation; this makes it possible to increase understanding of the user by promoting the functionality.

In addition, in the present embodiment, the anti-reflective portion 35 is provided in the operation board 29 of the operation unit 28 in which the illumination detection unit 30 is installed, and in the surface thereof surrounding the area where the illumination detection unit 30 is installed. Through this, it is possible to absorb light that has advanced from the display lights 32 and the notification light 33 from a gap between the board cover side wall surfaces 39b and the operation board 29, or to absorb irregular reflections in the light received through the light-receiving unit cover 37. As a result, causes of erroneous illumination detection can be eliminated, and precise illumination detection can be carried out.

In addition, in the present embodiment, the light-receiving unit cover 37 is disposed on a surface approximately vertical to the front surface of the refrigerator main body 21. Through this, grime such as dust, oil, or the like, and so on is prevented from building up on the light-receiving surface, which makes it possible to prevent the illumination detection unit 30 from being blocked, and thus makes it possible to eliminate operational problems caused by erroneous illumination detection.

In addition, in the present embodiment, the light-receiving surface of the light-receiving unit cover 37 is provided within the directionality angle whereby the illumination detection sensitivity of the illumination detection unit 30 is greater than or equal to 50%. Through this, fluctuation in the level of the detected illumination can be suppressed to a minimum with respect to positional skew rising during the assembly process of the light-receiving unit cover 37, the illumination detection unit 30, and so on, thus making it possible to carry out highly-reliable illumination detection with high precision.

### (Sixth Embodiment)

FIG. 11 is a cross-sectional view of the principle elements in the periphery of an illumination detection unit of a refrigerator according to a sixth embodiment of the present invention.

Note that in the present embodiment, the configurations of portions in which the technical spirit of the fifth embodiment can be applied can also be realized in combination with the configurations of the present embodiment.

To be more specific, the configurations of portions aside from the structure of the light-receiving unit cover 37, such as, for example, the board cover 39 and the board cover side wall surfaces 39b, use the same reference numerals as those used in the fifth embodiment, and thus detailed descriptions thereof shall be omitted.

In FIG. 11, the surface of the light-receiving unit cover 37 on the side of the illumination detection unit 30 has a partially spherical shape, where the thickness in the central portion is low, becoming thicker towards the outer circumference of the cover. Furthermore, the front surface side of the light-receiving unit cover 37 is disposed in a position that is slightly recessed beyond the surface of the operation board cover 27 (by, for example, 0.5 mm to 1 mm).

As described thus far, in the present embodiment, the light-receiving unit cover 37 has a reduced thickness relative to the light-receiving axis, where the sensitivity of the illumination detection unit 30 is highest; therefore, extremely precise illumination detection is possible in the central portion of the light-receiving unit cover 37.

Furthermore, because the external circumference portion is thicker, it is difficult for the user to see within the light-receiving unit cover 37 when he/she has peered thereinto from outside; therefore, the internal structural elements of the operation board 29 and the like cannot be seen by the user, which makes it possible to increase the quality of the external appearance.

Meanwhile, as described in this embodiment, at least the board cover side wall surfaces 39b of the board cover 39 are formed so as to have a lower light transmissibility than the operation unit cover 27, or in other words, so as to have higher light-blocking characteristics, which securely prevents visible light from entering from the side surface directions. Accordingly, this board cover 39 configuration is combined with the light-receiving unit cover 37 according to the present embodiment. Through this, while a comparatively greater amount of visible light enters from the central portion of the light-receiving unit cover 37, the effect in which the transmissibility of visible light is low, or in other words, the visible light-blocking properties are high, in the external circumference portions, is improved.

Through this, light can be suppressed from entering from the periphery in the forward direction, and thus the effect in which, for example, erroneous detections caused by disturbance light, in which light enters into the illumination detection unit 31 when the display lights 32, the notification light 33, and so on emit light, are prevented, is improved.

In addition, because the surface of the light-receiving unit cover 37 is recessed beyond the surface of the operation unit cover 27, the influence of light reflected by the operation unit cover 27 can be reduced. This makes it possible to achieve a precise illumination detection. Furthermore, it is extremely unlikely that the user will touch the light-receiving unit cover 37 when he/she wipes clean the operation unit cover 27, which makes it possible to eliminate causes of erroneous detection such as scratches, grime, and so on. This also makes it possible to increase the precision of the illumination detection unit 30.

### (Seventh Embodiment)

FIG. 12 is a cross-sectional view of the periphery of an illumination detection unit 30 in a refrigerator 200 according to a seventh embodiment of the present invention (a cross-sectional view along the B-B line in FIG. 11 in the sixth embodiment).

In the present embodiment, a cross-section of the structure for installing the illumination detection unit 30 as described in the fifth and sixth embodiments will be described. In other words, the configuration described in the present embodiment is realized in combination with the configurations described in the fifth and sixth embodiments. For this reason, the same reference numerals will be used for configurations described in the fifth and sixth embodiments, and detailed descriptions thereof will be omitted.

As shown in FIG. 12, in the B-B cross-section, or in other words, the B-B cross-section that is a cross-section orthogonal to the light-receiving direction, the board cover side wall surfaces 39b that surround the illumination detection unit 30 include portions of a length that is a distance d1, in which the distance from the light-receiving element 34 in the vertical direction and the horizontal direction is approximately the same. Note that the shape of the board cover side wall surfaces 39b may be angular or circular as long as they include the portion where the distance is d1, in which the distance from the light-receiving element 34 in the vertical direction and the horizontal direction is approximately the same.

In addition, in the present embodiment, in the cross-sectional form of the board cover side wall surfaces 39b, the portion having the same distance d1 from the central area where the light-receiving element 34 is disposed is formed so as to create an angle that is greater than or equal to 1/3 of the total inner circumference of the board cover side wall surfaces 39b.

To be more specific, in present embodiment, the total angle of the angles A, B, C, and D shown in FIG. 12 is greater than or equal to 120°, which is greater than or equal to 1/3 the total circumference angle, or in other words, 360°.

As described thus far, in the present embodiment, the walls of the board cover side wall surfaces 39b are formed in a position that is the same distance d1 in the vertical and horizontal directions from the light-receiving element 34 of the illumination detection unit 30. Through this, even if the incidence angle of the light received by the light-receiving element 34 varies slightly, the influence of reflection within the board cover side wall surfaces 39b is uniform, and thus a structural design that can comply with varying elements can be realized.

In addition, as shown in FIG. 12, even in the case where the board cover side wall surfaces 39b are not all at the same distance from the light-receiving element 34, the board cover side wall surfaces 39b are formed so that in the cross-sectional form of the board cover side wall surfaces 39b, the portion having the same distance d1 from the central area where the light-receiving element 34 is disposed is formed so as to create an angle that is greater than or equal to 1/3 of the total inner circumference of the board cover side wall surfaces 39b. Through this, detection error due to the influence of reflection within the board cover side wall surfaces 39b can be reduced, and varying elements can in turn be decreased. This makes it possible to improve the precision of the illumination detection unit 30.

### (Eighth Embodiment)

FIG. 13 is a front view of the principle elements of an operation unit cover 27 in a refrigerator 200 according to another embodiment, which is not part of the present invention.

In the present embodiment, a cross-section of the structure for installing the illumination detection unit 30 as described in the fifth and sixth embodiments will be described. In other words, the configuration described in the present embodiment is realized in combination with the configurations described in the fifth and sixth embodiments. For this reason, the same reference numerals will be used for configurations described in the fifth and sixth embodiments, and detailed descriptions thereof, and of the technical spirit, will be omitted.

In FIG. 13, a notification light cover 36 is structured so as to have a semitransparent or nonlinear form, and as a result, the notification light 33 inside cannot be seen by the user when the notification light 33 is extinguished, whereas the user can recognize emitted light of, for example, a green color when the notification light 33 is lit.

Likewise, the operation unit cover transparent portion 38 also has a structure whereby the user cannot see the display light 32 inside when the display light 32 is extinguished, whereas the user can recognize display text (in FIG. 13, text reading "freezing") emitted as, for example, orange or yellow light when the display light 32 is lit.

The light-receiving unit cover 37 ensures a transmissibility and a surface area for the light-receiving unit so that the minimum illumination required for the detection performed by the illumination detection unit 30 can be received, and is formed in a circular shape as a concentric circle from the light-receiving element 34.

In other words, in the present embodiment, the board cover side wall surfaces 39b have an essentially circular shape in the B-B cross-section (see FIG. 11), or in other words, in the cross-section orthogonal to the light-receiving direction. To rephrase, the board cover side wall surfaces 39b are in an essentially circular shape regardless of what cross-section is viewed as long as the cross-section is orthogonal to the light-receiving direction.

In other words, the board cover side wall surfaces 39b are formed in a position separated from the light-receiving element 34 of the illumination detection unit 30 by essentially the same distance d1, and are formed so as to surround the light-receiving element 34.

As described thus far, in the present embodiment, the board cover side wall surfaces 39b that surround the light-receiving element 34 of the illumination detection unit 30 are formed so as to be positioned at essentially the same distance d1 from the light-receiving element 34 in the entire circumference thereof. By doing so, even if the incidence angle of the received light varies slightly, the influence of reflection within the board cover side wall surfaces 39b is uniform, and thus a structural design that can comply with varying elements can be realized.

This makes it possible to further improve the detection precision of the illumination detection unit 30.

As described thus far, in the present embodiment, the light-receiving units (the light-receiving unit cover 37 and the board cover side wall surfaces 39b) are disposed in a circular shape centered on the light-receiving element 34 of the illumination detection unit 30, and thus the influence of disturbance light such as light from the lit notification light 33 and display light 32, other room lighting, and so on can be suppressed to a minimum.

### (Ninth Embodiment)

FIG. 14 is a front view of the principle elements of an operation unit cover 27 in a refrigerator 200 according to another embodiment, which is not part of the present invention.

In FIG. 14, the light-receiving unit cover 37 has a square shape with each edge disposed in the vertical and horizontal directions. To rephrase, the configuration is such that the notification light 33 and display light 32 are not positioned on lines extending from diagonal lines in the square where the distance from the center of the square, where the light-receiving element 34 of the illumination detection unit 30 is provided, is the greatest. In addition, the notification light 33 is disposed above the light-receiving unit cover 37, whereas the display light 32 is disposed below the light-receiving unit cover 37. Furthermore, the distances from edges of the light-receiving unit cover 37 to the notification light cover 36 and the operation unit cover transparent portion 38 are, as illustrated in FIG. 14, a distance d2 and a distance d3, respectively.

Accordingly, the location where lines connecting the external circumference of the light-receiving unit cover 37 to the notification light 33 and the display light 32 at the minimum distance is a location where, of the external circumference of the light-receiving unit cover 37, the distance from the center where the light-receiving element 34 is provided is the minimum. Through this, light is suppressed from entering into the illumination detection unit 30 from the sides thereof. As a result, erroneous detection caused by the disturbance light entering into the illumination detection unit 30 when, for example, the display light 32 or the notification light 33 emits light can be prevented.

As described thus far, in the present embodiment, in the case where the light-receiving unit cover 37 is desired to be designed in a square shape, the corners of the square shape are not disposed in the vertical and horizontal directions. Through this, the distance d2 and the distance d3 from the notification light 33 and the display light 32, respectively, to the light-receiving unit cover 37 is maximum, resulting in less influence of light emitted from the notification light 33 and display light 32 when lit, which makes it possible to carry out highly-reliable illumination detection.

Tenth embodiment, which is also not part of the present invention: A refrigerator 250 whose characteristic is in control for switching between normal operation and power-saving operation will be described as a tenth embodiment.

Note that the refrigerators 250 of the eleventh through thirteenth embodiments described later also respectively have characteristics in control for switching between normal operation and power-saving operation.

First, multiple refrigerator inventions related to the tenth through thirteenth embodiments will be described.

A first invention is a refrigerator including: a refrigerator main body; an illumination detection unit that detects illumination in the periphery of the installation environment of the refrigerator; a state detection unit that detects a usage state of the refrigerator; a determination unit that determines to switch between power-saving operation and normal operation based on information from the illumination detection unit and the state detection unit; and a control unit that is inputted with a signal from the determination unit and controls the operation of a current-consuming component of the refrigerator. The control unit switches from the normal operation to the power-saving operation based on a signal from the illumination detection unit and a signal from the state detection unit, and cancels the power-saving operation and switches to normal operation in the case where it has been determined, based on the input of the signal from the state detection unit, that a user has acted with intent.

According to this configuration, the operation mode is not switched based only on the illumination in the vicinity of the installation environment. To be more specific, the illumination detection unit is used primarily for switching to power-saving operation, whereas the state detection unit is primarily used for cancelling power-saving operation and switching to normal operation. Through this, the determination to switch the operation mode is made taking into consideration the usage state of the refrigerator, or in other words, the cooling operation required by the refrigerator, as well. For this reason, power-saving operation can be carried out even in the case where irregular lifestyle pattern states exist, such as when the user is active late at night when the room is in a dark state, when the user is asleep after dawn has broken and the room has become bright due to natural light, and so on, and the operation switch can be carried out with certainty. In other words, highly-reliable energy conservation control can be carried out.

A second invention is a refrigerator in which the determination unit determines whether it is late at night based on the information from the illumination detection unit, determines whether the interior temperature of the refrigerator is in a stable state based on the information from the state detection unit, and power-saving operation is commenced when both conditions have been met.

According to this configuration, in the case where normal operation is necessary because the temperature fluctuation within the refrigerator is great, power-saving operation is not carried out, even in the case where it has been determined to be late at night based on the illumination detection. Through this, influence on food items due to a rise in the interior temperature can be prevented.

A third invention is a refrigerator in which the determination unit determines whether it is late at night based on the information from the illumination detection unit, and a power-saving operation commencement condition, for commencing power-saving operation, is changed based on whether or not it has been determined to be late at night.

According to this configuration, power-saving operation is carried out in the case where human activity has stopped, even in the case where the periphery is bright (the case where the user is asleep after dawn has broken and the room is bright due to natural light, the case where the user is away from home, and so on); this makes it possible to realize further energy conservation.

A fourth invention is a refrigerator in which a late-night determination value used to determine whether it is late at night based on the information from the illumination detection unit is an illumination of 5 Lx or less.

According to this configuration, a state in which the room lights are not lit is detected, and thus it can be determined to be late at night, when the user has stopped activities and is sleeping, with certainty.

A fifth invention is a refrigerator in which the interior temperature of the refrigerator is taken as being in a stable state when the frequency of door openings and closings is low, based on the information from the state detection unit.

According to this configuration, the refrigerator can be determined to be in a stable state in which no warm air from the exterior has entered thereinto based on the frequency of refrigerator door openings and closings. In other words, the interior temperature can be determined to be in a stable state without performing complicated computational processes.

A sixth invention is a refrigerator in which the determination unit cancels the power-saving operation based only on the state detection unit, without using the information from the illumination detection unit.

According to this configuration, power-saving operation is continued as long as the interior temperature is stable even if the room has become bright due to natural light, and thus it is possible to further improve the actual energy conservation properties.

A seventh invention is a refrigerator in which the determination unit cancels the power-saving operation in the case where a door of the refrigerator was opened and closed at least once, based on the information from the state detection unit.

According to this configuration, in the case where it has been detected that the user has started his/her activities, or in other words, in the case where it can be predicted that the frequency of use of the refrigerator will increase, the refrigerator can be quickly switched to normal operation.

Another embodiment, which is not part of the present invention, is a refrigerator in which the determination unit cancels the power-saving operation in the case where an operation switch of the operation unit was manipulated, based on the information from the state detection unit.

According to this configuration, power-saving operation is canceled in the case where it can be determined that the user has requested the cooling performance of the refrigerator to be increased. For this reason, the reliability of the control for switching to normal operation can be improved with more certainty.

Another embodiment, which is not part of the present invention, is a refrigerator in which the determination unit cancels the power-saving operation when the interior temperature of the refrigerator has fluctuated by a set value or more, as the information from the state detection unit.

According to this configuration, the refrigerator is switched to normal operation aside from when the refrigerator is being used by a user, such as when a door is opened and closed, a switch is manipulated, and so on; for example, this switch is made after defrosting operations that involve a rise in the interior temperature, and therefore negative influence on food items due to temperature fluctuations can be eliminated.

Another embodiment, which is not part of the present invention, is a refrigerator in which the determination unit continues the normal operation without commencing the power-saving operation in the case where the illumination detected by the illumination detection unit does not change for longer than a pre-set period.

According to this configuration, switching to power-saving operation based on an erroneous illumination detection caused by a malfunction of the illumination detection unit or the like can be prevented, and thus highly-reliable energy conservation control can be carried out.

Another embodiment, which is not part of the present invention, will be described hereinafter with reference to the drawings. Configurations identical to those in the conventional examples or the embodiments mentioned above are assigned the same reference numerals, and detailed descriptions thereof shall be omitted. Note that the present invention is not limited by this embodiment.

FIG. 15 is a front view of the refrigerator according to the tenth embodiment of the present invention. FIG. 16 is a cross-sectional view of the refrigerator according to the tenth embodiment. FIG. 17 is a configuration diagram of an operation board in an operation unit in the refrigerator according to the tenth embodiment. FIG. 18 is a control block diagram of the refrigerator according to the tenth embodiment. FIG. 19 is a control flowchart of the refrigerator according to the tenth embodiment. FIG. 20 is a distribution diagram illustrating monitor data of the surrounding illumination of the refrigerator according to the tenth embodiment.

As shown in FIG. 15, the refrigerator 250 according to the tenth embodiment includes a refrigerator main body 21. The refrigerator main body 21 includes a refrigerating compartment 22, an ice compartment 23, a switchable compartment 24, a freezer compartment 25, and a vegetable compartment 26 laid out in that order from the top down. An operation unit 77 is disposed in the vicinity of the central portion of a refrigerating compartment door 22a of the refrigerating compartment 22.

In FIG. 16, an insulating main body, which is the refrigerator main body 21, is configured of an outer housing that primarily uses steel plates, an inner housing formed of a resin such as ABS or the like, and a foam insulating material, such as rigid foamed urethane, that has been injected into the space between the outer housing and the inner housing; the insulating main body divides the multiple storage compartments into insulated sections that are insulated from their surroundings using partition walls.

The refrigerating compartment 22 is disposed in the uppermost portion of the refrigerator main body 21, with the switchable compartment 24 or ice compartment 23 provided side-by-side below the refrigerating compartment 22; the freezer compartment 25 is disposed below the switchable compartment 24 and the ice compartment 23, and the vegetable compartment 26 is disposed in the lowermost portion. The doors in front of the respective storage compartments for blocking the outside air configure front opening portions of the refrigerator main body 21.

Meanwhile, the top surface of the insulating main body has a shape in which a step-shaped concavity is provided facing toward the rear surface of the refrigerator main body 21. A machine compartment is formed in this step-shaped concavity, and a compressor 48 and high-voltage components of a refrigeration cycle including a dryer for removing water (not shown) are housed within the machine compartment. In other words, the machine compartment in which the compressor 48 is disposed is formed cutting into the rear area of the uppermost portion of the refrigerating compartment 22.

Note that the items relating to the principle elements of the invention described hereinafter in the present embodiment may also be applied to a refrigerator of a type in which the machine compartment is provided in a region behind the storage compartment in the lowermost portion of the insulating main body and the compressor 48 is disposed therein, which is common conventionally.

Next, a cooling compartment 49 that produces cool air is provided in the back surface of the freezer compartment 25, and is divided into air flow paths. Air flow paths for transporting cool air and leading to the respective insulated compartments and back surface partition walls that insulatively separate the respective storage compartments are configured between the cooling compartment 49 and the other storage compartments. Meanwhile, a partition plate for separating a freezer compartment expulsion air flow path and the cooling compartment 49 is provided. A cooling unit 50 is disposed within the cooling compartment 49, and a cooling fan 51 that blows cool air cooled by the cooling unit 50 to the refrigerating compartment 22, the switchable compartment 24, the ice compartment 23, the vegetable compartment 26, and the freezer compartment 25 using the forced-convection method is disposed in the space above the cooling unit 50. Meanwhile, a glass-tube defrosting heater 52 for removing frost, ice, and so on that has accumulated on the cooling unit 30 and the periphery thereof during cooling is provided in the space below the cooling unit 50.

The states of the respective storage compartments will be described in detail hereinafter.

The refrigerating compartment 22 is normally 1°C to 5°C, as the lower limit for temperatures for refrigerated storage without freezing, whereas the lowermost vegetable compartment 26 is set at the same or a slightly higher temperature than the refrigerating compartment 22, or 2°C to 7°C. Meanwhile, the freezer compartment 25 is set to a freezing temperature range, and is normally set to -22 to -18°C for frozen storage, but it is also set to a lower temperature of -30 or -25°C, for example, for improving the frozen-storage state.

The switchable compartment 24 can be switched between "refrigeration", which is set to 1°C to 5°C, "vegetables", which is set to 2°C to 7°C, and "freezing", which is normally set to -22°C to -15°C, as well as a pre-set temperature range between the refrigeration temperature range and the freezing temperature range. The switchable compartment 24 is a storage compartment provided with an independent door alongside the ice compartment 23, and often employs a drawer-type door.

Note that in the present embodiment, the switchable compartment 24 is taken as a storage compartment that includes both refrigeration and freezing temperature ranges. However, because refrigeration is left to the refrigerating compartment 22 and vegetable compartment 26 and freezing is left to the freezer compartment 25, the switchable compartment 24 may be taken as a storage compartment specialized for switching only to the stated temperature range that is between refrigeration and freezing. In addition, the switchable compartment 24 may be a storage compartment that is fixed at a specific temperature range, such as, for example, freezing, in light of the recent increased demand for frozen foods.

The ice compartment 23 makes ice using an automatic ice machine provided in the upper portion within the compartment with water sent from a reservoir tank (not shown) within the refrigerating compartment 22, and stores the ice in an ice storage receptacle (not shown) disposed in the lower portion within the compartment.

Next, as shown in FIG. 17, the operation board 77a is provided within the operation unit 77, and an illumination detection unit 53 is provided above the operation board 77a on a line extending from the vertical axis thereof. The illumination detection unit 53 can specifically be configured using a light sensor whose base element is a photodiode, a phototransistor, or the like.

Meanwhile, operation switches 60 for carrying out settings such as interior temperature settings for the respective compartments, ice making, speed cooling, and so on, display lights 85 that display states set using the operation switches 60, and a notification unit 86 that uses an LED or the like to communicate the operation state of the refrigerator 250, or in other words, switching between normal operation and power-saving operation, are disposed in the operation board 77a.

The control configuration for the aforementioned constituent elements will be described using the control block diagram of FIG. 18.

As shown in FIG. 18, a signal Sn1 from the illumination detection unit 53 and a signal Sn2 from a state detection unit 57 communicating the usage state of the refrigerator 250 are inputted into a determination unit 41. Specifically, the state detection unit 57 is configured of an interior temperature sensor 58 that detects the interior temperature, a door switch 59 that detects the open and closed state of the doors of the respective storage compartments, and the operation switches 60 for specifying the interior temperature setting, speed cooling operation, speed ice operation, and so on.

Meanwhile, a signal Sn3 is outputted from the determination unit 41 to the control unit 42, and furthermore, signals Sn4, Sn5, and Sn6 for controlling the current-consuming components are outputted to the compressor 48, cooling fan 51, and defrosting heater 52, respectively, from the control unit 42.

Operations and effects of the refrigerator 250 configured as described above will be described using the control flowchart of FIG. 19 and the distribution diagram illustrating monitor data of the surrounding illumination of the refrigerator 250 shown in FIG. 20.

First, in a state of operation according to the main control flow, the number of door openings and closings per unit time is detected by the door switch 59, which is an example of the state detection unit 57, in S121, and is inputted into the determination unit 41 as the signal Sn2. Furthermore, the determination unit 41 determines whether or not the number of door openings and closings per unit time is less than a specified value of N times. If the result of this determination indicates less than N times, the logic is advanced to S122, whereas if not, the logic is advanced to S124, where normal operation is carried out, and the logic is then returned to the main control flow.

Next, in S122, the illumination in the periphery of the installation environment of the refrigerator 250 is detected by the illumination detection unit 53, and that illumination is inputted into the determination unit 41 as the signal Sn1. Furthermore, the determination unit 41 determines whether or not the illumination is an illumination that is less than a late-night determination value, and if the illumination is less than the late-night determination value, it is determined to be late at night, and the logic is advanced to S123, where power-saving operation is commenced (or continued, if power-saving operation is already underway). Meanwhile, if the illumination is not less than the late-night determination value, the logic is advanced to S124, where normal operation is carried out, and the logic returns to the main control flow.

Here, the reason for taking the late-night determination value for illumination as 5 Lx and determining less than 5 Lx to be late at night will be described using the distribution diagram illustrating monitor data of illumination in FIG. 20.

FIG. 20(a) indicates all data for illuminations measured throughout twenty actual households, and indicates distributions of illuminations during daytime activities, when waking up in the morning, during nighttime activities, and when asleep (late at night), in that order from top to bottom.

FIG. 20(b) is an enlarged view in which the illuminations from 0 Lx to 35 Lx in FIG. 20(a) have been extracted. As shown in FIG. 20(b) and FIG. 20(a), there is an extremely large variance when people are active regardless of day or night, but it can be seen that the illumination is 2 Lx or less in all households late at night when people are asleep.

In addition, there is a border region where no data is present between 10 Lx, which is the minimum illumination for nighttime activity, and the nighttime illumination. Accordingly, in the present embodiment, values within this border region are employed as determination values, and furthermore, the precision of the illumination detection unit 53 (variance in the light sensor and structure of the configuration) is also taken into account. As a result, the late-night determination value, which is a threshold for determining that it is late at night, is set to 5 Lx.

Next, in S125 after power-saving operation has commenced, the door switch 59, which is an example of the state detection unit 57, outputs the signal Sn2, in which door opening and closing has been detected, to the determination unit 41, and the determination unit 41 determines whether or not a door has been opened and closed. If the result of the determination indicates that a door has not been opened and closed, the logic is advanced to S126, whereas if not, the logic is advanced to S129, where power-saving operation is ended.

Furthermore, in S126, the operation switch 60, which is an example of the state detection unit 57, outputs a signal Sn2, for when the user has manipulated the operation unit 77, to the determination unit 41, and the determination unit 41 determines whether or not a manipulation has occurred. If the result of the determination indicates that a manipulation has not occurred, the logic is advanced to S127, whereas if not, the logic is advanced to S129, where power-saving operation is ended.

In addition, as described above, in S126, whether or not the user manipulated the operation unit 77 is used for a role of a human sensor, which determines whether a person is nearby. However, in the case where, for example, the user has touched the operation unit 77 not only in order to confirm the set temperature or the like, but also to set operations for actively cooling (settings for raising the set temperature in the interior temperature settings of the respective compartments, ice making, speed cooling, and so on), or in the case where the user has made some kind of change to the settings, the determination unit 41 may determine that there has been a manipulation only in the case where such a conscious manipulation has occurred. Determining the presence/absence of intent on the part of the user with respect to the refrigerator 250 based on the presence/absence of a conscious manipulation in this manner makes it possible to carry out precise control that conforms more to the user's usage conditions.

Furthermore, in S127, the interior temperature sensor 58, which is an example of the state detection unit 57, outputs the signal Sn2, in which the interior temperature of the refrigerator 250 has been detected, to the determination unit 41, and the determination unit 41 determines whether or not that interior temperature is greater than or equal to a specified temperature t°C. If the result of this determination indicates that the temperature is less than the specified temperature, it is assumed that the temperature fluctuation is low, and the logic is advanced to S128; however, if the temperature is greater than or equal to the specified temperature, it is determined that the temperature fluctuation is high, and the logic is advanced to S129, where power-saving operation is ended.

Next, in S128, the determination unit 41 determines that there is no change in the usage state of the refrigerator 250, and outputs, to the control unit 42, the signal Sn3 for continuing power-saving operation. The control unit 42 outputs the signals Sn4, Sn5, and Sn6 to the current-consuming components, or the compressor 48, the cooling fan 51, and the defrosting heater 52, respectively, and continues power-saving operation. In this manner, with the refrigerator 250 of the present embodiment, the determination unit 41 determines whether it is possible to continue power-saving operation while repeating S125 and S126, for determining the presence/absence of the user acting with intent with respect to the refrigerator 250, and S127, for determining the interior cooling state, even if power-saving operation is underway.

Meanwhile, in S129, the determination unit 41 outputs the signal Sn3 indicating the end of power-saving operation to the control unit 42 in the case where there has been a change in the usage state of the refrigerator 250, or where it has been determined that the user has acted with intent (opening and closing a door, setting operations, or the like), or in the case where a change in the interior temperature has occurred due to a system operation.

Then, the control unit 42 outputs the signals Sn4, Sn5, and Sn6 to the respective current-consuming components, or the compressor 48, the cooling fan 51, and the radiant heater 52, thereby causing power-saving operation to end, and switches the logic to normal operation, which is the main control flow.

As described thus far, in the present embodiment, in the case where both information from the illumination detection unit 53 and information from the state detection unit 57 fulfill conditions for switching operations, the refrigerator is switched between power-saving operation and normal operation. Through this, erroneous determinations based only on information from the illumination detection unit 53, particularly during times of activity in a state in which the room is dark late at night, can be prevented, and thus highly-reliable energy conservation control can be carried out.

Meanwhile, even in the case where it has been determined to be late at night, there are cases where the late-night determination is made in the case of a kitchen or the like that has no windows and is thus dark even during daytime. However, in the present embodiment, a case where the illumination is less than the late-night determination value is defined as "late at night" even in such a case where it is daytime but the surroundings are dark.

In other words, as described above, in the case where the determination unit 41 has determined that it is late at night, or in other words, in the case where the illumination is low based on the illumination detected by the illumination detection unit 53, and furthermore, in the case where the determination unit 41 has determined that the user has not acted with intent based on the result of the detection made by the state detection unit 57, the operation is moved to power-saving operation specifically in the case where there have been no door openings and closings within a pre-set period of time and the interior temperature sensor 58 has not detected a fluctuation in temperature greater than a pre-set temperature fluctuation amount within a pre-set period of time.

Through this, it is possible to carry out power-saving operation in a state where there is less influence on the freshness maintenance properties for food items. For this reason, power-saving operation can be carried out even in the case where irregular lifestyle pattern states exist, such as when the user is active late at night when the room is in a dark state, when the user is asleep after dawn has broken and the room has become bright due to natural light, and so on. In other words, the refrigerator 250, which automatically switches between power-saving operation and normal operation, can switch between operations with certainty, and carry out highly-reliable energy conservation control.

Furthermore, even in the case where power-saving operation is underway, the power-saving operation is always quickly canceled in the case where the determination unit 41 has determined that the user has acted with intent with respect the refrigerator 250 based on the detection results from the state detection unit 57, or in other words, in the case where the user has operated the operation unit 77 (or, in the case where, rather than operating the operation unit 77, the user has made a conscious operation with the intent to actively carryout cooling), or the case where the interior temperature fluctuation is great and it is necessary to carry out normal operation; this makes it possible to eliminate influence on food items caused by a rise in temperatures.

In addition, by setting the illumination of the late-night determination value for determining that it is late at night using information from the illumination detection unit 53 to less than 5 Lx, it is possible to determine that the user has stopped activity and is asleep, thus making it possible to switch to power-saving operation based on a late-night determination that has been carried out with certainty.

Note that in the present embodiment, the late-night determination value for determining that it is late at night is 5 Lx, which is a value that is within a border region, in which there is no data in which is between 10 Lx, or the minimum illumination for nighttime activity, and the late-night illumination, and which is a value that takes into consideration a certain margin of allowance. However, the late-night determination value may be set to 10 Lx, which is the minimum illumination for nighttime activity, and in such a case as well, it can be determined whether or not the state is one that is close to late at night, where users are for the most part inactive.

In the present embodiment, even after power-saving operation has been commenced, the state detection unit 57 detects whether or not the user has acted with intent, or in other words, whether a door has been opened and closed, whether or not the operation unit 77 has been manipulated, and so on, and the determination unit 41 determines, with precision, to switch between power-saving operation and normal operation. For this reason, as described above, even in the case where the late-night determination value is a slightly higher illumination, or in other words, even in the case where the conditions for late-night determination are slightly loose conditions, it is possible to prevent problems such as a lack of cooling, undercooling, and so on, and thus it is possible to carry out power-saving operation without problems.

In this manner, in the present embodiment, the state detection unit 57 detects whether or not the user has acted with intent with respect the refrigerator 250 as a condition for commencing power-saving operation, and furthermore, even after power-saving operation has been commenced, the state detection unit 57 detects whether or not the user has acted with intent using stricter conditions. For this reason, the determination unit 41 can determine, with accuracy, whether or not power-saving operation is possible, and a refrigerator 250 that automatically carries out power-saving operation in a typical household, which is an actual usage environment of the refrigerator 250, can be realized.

In addition, by using a case where doors are open and closed infrequently as detected by the door switch 59, which is information from the state detection unit 57, as a condition for determining the state of stability of the interior temperature, it can be determined, without complicated computational processes, whether warm air from the exterior, which influences the interior temperature, has entered into the refrigerator. For this reason, switching to power-saving operation can be carried out at a low cost and with high reliability.

Meanwhile, power-saving operation may be cancelled using only information from the state detection unit 57, without using illumination information from the illumination detection unit 53. In this case, the actual energy conservation properties can be further improved, because even in the case where the room is bright in the morning due to natural light but the user is sleeping, power-saving operation is continued as long as the interior temperature is stable.

In addition, even just a single door opening and closing as detected by the door switch 59 may be used as a condition for the state detection unit 57 canceling power-saving operation. Through this, it can be predicted that the frequency with which the user uses the refrigerator will increase thereafter, and thus the refrigerator can quickly be switched to normal operation so that cooling operation for reducing the interior temperature is carried out; this makes it possible to perform high-quality energy conservation control.

In addition, the case where the operation unit 77 has been manipulated, which is an example of a case in which the user has acted with intent with respect to the refrigerator 250, may be used by the state detection unit 57 as the condition for canceling power-saving operation. Through this, a dedicated sensor such as a human sensor or the like need not be installed, and the operation unit 77, which is provided in advance in the refrigerator 250, can fulfill the role of the human sensor. In other words, the state detection unit 57 can be provided with a simple configuration that uses few resources, and operation can be switched to normal operation with certainty, which makes it possible to prevent problems such as a lack of cooling, undercooling, and so on caused by continuing power-saving operation.

In addition to the above, among cases where the operation unit has been manipulated, a case where at least one of the operation switches 60 for carrying out interior temperature settings, speed cooling operation, speed ice-making operation, or the like has been manipulated, or in other words, a case where such a conscious manipulation has been carried out, may be used by the state detection unit 57 as the condition for canceling power-saving operation. Through this, it can be determined that the user is requesting the cooling performance of the refrigerator 250 to be increased, and the refrigerator can be switched to normal operation with certainty; this makes it possible to prevent problems such as a lack of cooling, undercooling, or the like caused by continuing power-saving operation.

In addition, the case where the interior temperature as detected by the interior temperature sensor 58 has fluctuated greater than or equal to a set value may be used by the state detection unit 57 as a condition for canceling power-saving operation. Through this, the interior temperature is measured directly and the refrigerator is switched to normal operation smoothly, thus making it possible to suppress an increase in the interior temperature due to defrosting operations or the like to the greatest extent possible, and making it possible to store food items in a high-quality state.

Note that in the present embodiment, in the case of moving from normal operation to power-saving operation, the control unit 42 switches from normal operation to power-saving operation taking into consideration information from the state detection unit 57 in addition to information from the illumination detection unit 53. However, at least in the case of moving from normal operation to power-saving operation, the control unit 42 may switch from normal operation to power-saving operation based only on information from the illumination detection unit 53. In other words, even in the case where, for example, a door was opened and closed or the like immediately prior thereto, in the case where the illumination is less than a certain set value and it has been determined to be late at night, it is determined to be unlikely that strong cooling will be necessary thereafter, and power-saving operation is thus carried out; this makes it possible to more effectively save power.

In addition, in the case of switching from power-saving operation to normal operation, not taking information from the illumination detection unit 53 into consideration is a useful method for realizing further energy conservation.

By the control unit 42 performing control so as to return the refrigerator to normal operation based only on information from the state detection unit 57, the refrigerator is switched to normal operation in the case where it has been determined that the user has acted with intent even if, for example, the surroundings are in a dark state; this makes it possible to quickly return to a state in which cooling is actively carried out. Meanwhile, conversely, the refrigerator is not returned to normal operation based only on information from the illumination detection unit 53, even in the case where dawn has broken and the surroundings have become bright. For this reason, power-saving operation can be continued in the case where the user continues to sleep even after dawn has broken and the case where the user is not at home and is thus not using the refrigerator 250, thus making it possible to realize further energy conservation.

### (Eleventh Embodiment)

FIG. 21 is a control flowchart of a refrigerator 250 according to another embodiment, which is not part of the present invention.

Note that in the present embodiment, the configurations of portions in which the technical spirit of the tenth embodiment can be applied can also be realized in combination with the configurations of the present embodiment.

Operations of the refrigerator 250 according to the eleventh embodiment will be described using FIG. 21.

First, in a state of operation according to the main control flow, in S130, the illumination in the periphery of the installation environment of the refrigerator 250 is detected by the illumination detection unit 53, and that illumination is inputted into the determination unit 41 as the signal Sn1. Then, the determination unit 41 compares that illumination with a previously-detected illumination stored in a predetermined storage region, and determines whether or not there has been no change in illumination for greater than or equal to a pre-set period T (for example, one week, when the user is traveling or the like and is expected to be away from home). In the case where the result of this determination indicates that there has been no change, the logic is advanced to S131, whereas if not, the logic is returned to the main control flow. Next, in S131, the determination unit 41 determines whether or not the refrigerator is currently in power-saving operation based on stored information indicating the current operation state. If the result of this determination indicates that the refrigerator is currently in power-saving operation, the logic is advanced to S132, whereas if not, the logic is returned to the main control flow.

Next, in S132, it is determined that late-night is not being properly detected due to a malfunction of the illumination detection unit 53 or the like; power-saving operation is ended, and the logic is returned to the main control flow. At this time, the user may be notified that an error such as a malfunction of the illumination detection unit 53 has occurred using the notification unit 86, through, for example, a pattern of blinking lights or the like.

As described thus far, in the present embodiment, in the case where there is no change in the illumination detected by the illumination detection unit 53 for a set period of time, it is assumed that a normal lifestyle pattern is not being properly detected, and thus determined that the illumination detection unit 53 has malfunctioned, the light-receiving unit has been blocked by bills or the like posted by the user, and so on. As a result, the refrigerator is not switched to power-saving operation, and thus highly-reliable energy conservation control can be carried out.

### (Twelfth Embodiment)

FIG. 22 is a control flowchart of a refrigerator 250 according to another embodiment, which is not part of the present invention.

Note that in the present embodiment, the same reference numerals are used for configurations that are the same as those in the tenth embodiment, and detailed descriptions thereof will be omitted. In addition, the configurations of portions in which the technical spirit of the tenth or eleventh embodiments can be applied can also be realized in combination with the configurations of the present embodiment.

Operations of the refrigerator 250 according to the twelfth embodiment will be described using FIG. 22.

In the present embodiment, more conditions for commencing power-saving operation are added to those of the tenth embodiment, and the compatibility with the conditions for commencing power-saving operation is determined using multiple sensors.

"Multiple sensors" specifically refers to the door switch 59, which is a sensor for detecting the number of door openings and closings, the interior temperature sensor 58 for detecting the interior temperature, and the illumination detection unit 53 that detects illumination. In the present embodiment, power-saving operation is carried out having confirmed the operation state of the refrigerator 250 on a variety of levels using the multiple sensors. Through this, problems such as a lack of cooling, undercooling, and so on caused by continuing power-saving operation are prevented, and highly-reliable energy conservation control is carried out.

First, in a state of operation according to the main control flow, the number of door openings and closings per unit time is detected by the door switch 59, which is an example of the state detection unit 57, in S221, and the result of the detection is inputted into the determination unit 41 as the signal Sn2. Furthermore, the determination unit 41 determines whether or not the number of door openings and closings per unit time is less than or equal to a specified number N, and the logic advances to S222 in the case where the number is less than or equal to N; if not, however, the logic advances to S226, normal operation is carried out, and the logic returns to the main control flow.

At this time, in the present embodiment, it is assumed that the unit time for determining the door opening and closing detection is, for example, ten minutes, and that the number of door openings and closings is, for example, N = 2.

Next, in S222, it is determined whether or not high-load cooling, such as speed-cooling operations including speed ice-making, speed freezing, or the like is necessary; when unnecessary, the logic advances to S223, whereas when necessary, the logic advances to S226, where normal operation is carried out and the logic then returns to the main control flow.

This high-load cooling is a high-load setting resulting from, for example, the user acting with intent in order to make conscious operations for speed ice-making, speed cooling, or the like, and there are cases where such high-load cooling is carried out. However, in the case of a refrigerator 250 provided with, for example, additional functionality for automatic cooling, automatic speed cooling, or the like, there are situations where the high-load cooling is selected automatically rather than based on the user's intent. Accordingly, in S222, which is one condition for commencing power-saving operation, it is determined that the state requires high-load cooling if the state does indeed require high-load cooling, regardless of the presence/absence of user intent.

Furthermore, in S223, the interior temperature sensor 58, which is an example of the state detection unit 57, outputs the signal Sn2, indicating the result of detecting the interior temperature of the refrigerator 250, to the determination unit 41, and the determination unit 41 determines whether or not the temperature difference between the interior temperature and a set temperature is greater than or equal to Δt1. If the result of the determination indicates that the temperature difference is less than Δt1, it is assumed that the temperature fluctuation is low, and the logic advances to S224, whereas if the temperature difference is greater than or equal to Δt1, it is assumed that the temperature fluctuation is high, and the logic advances to S226, where normal operation is carried out; the logic then returns to the main control flow. Note that Δt1 for the temperature difference serving as the basis of determination at this time may be, for example, 3°C.

Next, in S224, the illumination in the periphery of the installation environment of the refrigerator 250 is detected by the illumination detection unit 53, and that illumination is inputted into the determination unit 41 as the signal Sn1. Furthermore, the determination unit 41 determines whether or not the illumination is less than 5 Lx, or the late-night determination value, and if the illumination is less than the late-night determination value, it is determined to be late at night, and the logic is advanced to S225, where power-saving operation is commenced (or continued, if power-saving operation is already underway). Meanwhile, if the illumination is not less than the late-night determination value, the logic is advanced to S226, where normal operation is carried out, and the logic returns to the main control flow.

Here, the reason for taking the late-night determination value for illumination as 5 Lx in the present embodiment is the same as described in the tenth embodiment, and thus such descriptions will be omitted in the present embodiment.

S225, where power-saving operation is commenced, is first advanced to in the case where all of the conditions for commencing power-saving operation, or the number of door openings and closings, whether or not high-load cooling is necessary, the state of stability of the interior temperature, and the result of illumination detection, are within a pre-set range.

In S227, after power-saving operation has been commenced, the number of door openings and closings per unit time is detected by the door switch 59, which is an example of the state detection unit 57, and that number is inputted into the determination unit 41 as the signal Sn2. Furthermore, the determination unit 41 determines whether or not there was even one door opening and closing; if there was not a door opening and closing, the logic is advanced to S228, whereas if not, the logic is advanced to S231, and power-saving operation is ended. Note that the unit time for detecting/determining a door opening and closing at this time may be, for example, ten minutes.

Furthermore, in S228, the operation switch 60, which is an example of the state detection unit 57, outputs a signal Sn2, for when the user has manipulated the operation unit 77, to the determination unit 41, and the determination unit 41 determines whether or not a manipulation has occurred. If the result of the determination indicates that a manipulation has not occurred, the logic is advanced to S229, whereas if not, the logic is advanced to S231, where power-saving operation is ended.

Meanwhile, as described above, in S228, whether or not the user manipulated the operation unit 77 is used in order to determine whether or not a person is nearby the refrigerator 250. However, in the case where, for example, the user has touched the operation unit 77 not only in order to confirm the set temperature or the like, but also to carry out operations for actively cooling (settings for raising the set temperature in the interior temperature settings of the respective compartments, ice making, speed cooling, and so on), or in the case where the user has made some kind of change to the settings, the determination unit 41 may determine that there has been a manipulation only in the case where such a conscious manipulation has occurred. Determining the presence/absence of intent on the part of the user with respect to the refrigerator 250 based on the presence/absence of a conscious manipulation in this manner makes it possible to carry out precise control that conforms more to the user's usage conditions.

Furthermore, in S229, the interior temperature sensor 58, which is an example of the state detection unit 57, outputs the signal Sn2, indicating the result of detecting the interior temperature of the refrigerator 250, to the determination unit 41, and the determination unit 41 determines whether or not the temperature difference between the interior temperature and a set temperature is greater than or equal to Δt2. If the result of the determination indicates that the temperature difference is less than Δt2, it is assumed that the temperature fluctuation is low, and the logic advances to S230, whereas if the temperature difference is greater than or equal to Δt2, it is assumed that the temperature fluctuation is high, and the logic advances to S231. Note that Δt2 for the temperature difference serving as the basis of determination at this time may be, for example, 3°C.

Meanwhile, the present embodiment assumes that the determination as to whether or not the temperature difference is greater than or equal to Δt2 is made instantaneously. However, the logic can be advanced in a more certain manner by using whether a state in which the temperature difference is greater than or equal to or less than Δt2 has continued for a set period of continuous time (for example, five minutes) as the condition for whether to continue (S230) or terminate (S231) power-saving operation.

Next, in S230, the determination unit 41 determines that there is no change in the usage state of the refrigerator 250, and outputs, to the control unit 42, the signal Sn3 for continuing power-saving operation. The control unit 42 outputs the signals Sn4, Sn5, and Sn6 to the current-consuming components, or the compressor 48, the cooling fan 51, and the defrosting heater 52, respectively, and continues power-saving operation. In this manner, with the refrigerator 250 of the present embodiment, the determination unit 41 determines whether it is possible to continue power-saving operation while repeating S227 and S228, for determining whether the user has acted with intent, and S229, for determining the interior cooling state, even if power-saving operation is underway.

Meanwhile, in S231, the determination unit 41 outputs the signal Sn3 indicating the end of power-saving operation to the control unit 42 in the case where there has been a change in the usage state of the refrigerator 250, or in other words, where it has been determined that the user has acted with intent (opening and closing a door, setting operations, or the like), or in the case where a change in the interior temperature has occurred due to a system operation. Then, the control unit 42 outputs the signals Sn4, Sn5, and Sn6 to the respective current-consuming components, or the compressor 48, the cooling fan 51, and the radiant heater 52, thereby causing power-saving operation to end, and switches the logic to the main control flow.

As described thus far, in the present embodiment, in the case where both information from the illumination detection unit 53 and information from the state detection unit 57 fulfill conditions for switching operations, the refrigerator is switched between power-saving operation and normal operation. Through this, erroneous determinations based only on information from the illumination detection unit 53, particularly during times of activity in a state in which the room is dark late at night, can be prevented, and thus highly-reliable energy conservation control can be carried out.

In other words, as described above, the refrigerator is switched to power-saving operation only in the case where it has been determined to be late at night based on information from the illumination detection unit 53, or in other words, in the case where the illumination is less than the late-night determination value and it has furthermore been determined that the user has not acted with intent based on information from the state detection unit 57; or to be more specific, in the case where a door has not been opened and closed within a pre-set period of time, no settings based on conscious operations reflecting the intent of the user to actively carry out cooling, such as a rise in the set temperature for the interior temperature setting of the respective compartments, speed ice-making, speed cooling, or the like, have been made, and a temperature fluctuation greater than a pre-set temperature fluctuation amount has not been detected by the interior temperature sensor 58 to have occurred within a pre-set period of time.

In this manner, by adding, to the conditions for commencing power-saving operation, conscious operations taking into account the intent of the user and setting states resulting from conscious operations, it is possible to commence power-saving operation in a state where there is less influence of the freshness maintenance properties for food items. For this reason, power-saving operation can be carried out even in the case where irregular lifestyle pattern states exist, such as when the user is active late at night when the room is in a dark state, when the user is asleep after dawn has broken and the room has become bright due to natural light, and so on; this makes it possible to switch operations with certainty, and carry out highly-reliable energy conservation control.

In addition, power-saving operation is not commenced in the case where the interior temperature fluctuation is great and normal operation is necessary, thus making it possible to commence power-saving operation in a state where there is less influence of the freshness maintenance properties for food items; this makes it possible to prevent negative influence on food items caused by a rise in temperature resulting from power-saving operation.

Meanwhile, the late-night determination value, which is the threshold in the information from the illumination detection unit 53 for determining whether or not it is late at night, is taken as 5 Lx. In other words, it is determined to be late at night in the case where the illumination detected by the illumination detection unit 53 is less than the late-night determination value. Through this, it can be determined that the user is inactive and asleep with certainty, and thus it is possible to switch to power-saving operation based on a late-night determination that has been carried out with certainty.

This 5 Lx is a state of darkness achieved even during the daytime when the shutters have been closed, and is a state that cannot be realized simply by closing the curtains.

In addition, by canceling power-saving operation using only the information from the state detection unit 57 without using the illumination information from the illumination detection unit 53, the power-saving operation is continued as long as the interior temperature is stable even in the case where the user is asleep after dawn has broken and the room is bright due to natural light; this makes it possible to further improve the actual energy conservation properties.

In addition, even just a single door opening and closing as detected by the door switch 59 may be used as a condition for the state detection unit 57 canceling power-saving operation. Through this, it can be predicted that the frequency with which the user uses the refrigerator will increase thereafter, and thus the refrigerator can quickly be switched to normal operation so that cooling operation for reducing the interior temperature is carried out; this makes it possible to perform high-quality energy conservation control.

In addition, the case where the operation unit 77 has been manipulated, which is an example of a case in which the user has acted with intent with respect to the refrigerator 250, may be used by the state detection unit 57 as the condition for canceling power-saving operation. Through this, a dedicated sensor such as a human sensor or the like need not be installed, and the operation unit 77, which is provided in advance in the refrigerator 250, can fulfill the role of the human sensor. In other words, the state detection unit 57 can be provided with a simple configuration that uses few resources, an operation can be switched to normal operation with certainty, which makes it possible to prevent problems such as a lack of cooling, undercooling, and so on caused by continuing power-saving operation.

In addition to the above, among cases where the operation unit 77 has been manipulated, a case where at least one of the operation switches 60 for carrying out interior temperature settings, speed cooling operation, speed ice-making operation, or the like has been manipulated, or in other words, a case where a conscious manipulation has been carried out, may be used by the state detection unit 57 as the condition for canceling power-saving operation. Through this, it can be determined that the user is requesting the cooling performance of the refrigerator 250 to be increased, and the refrigerator can be switched to normal operation with certainty; this makes it possible to prevent problems such as a lack of cooling, undercooling, or the like caused by continuing power-saving operation.

In addition, the case where the interior temperature as detected by the interior temperature sensor 58 has a large difference compared to the set temperature may be used by the state detection unit 57 as a condition for canceling power-saving operation. Through this, it is possible to realize cooling in which the set temperature, which is an example of the intent of the user, and the cooling state are taken into consideration in a more certain manner.

Note that in the present embodiment, in the case of moving from normal operation to power-saving operation, the control unit 42 switches from normal operation to power-saving operation taking into consideration information from the state detection unit 57 in addition to information from the illumination detection unit 53. However, at least in the case of moving from normal operation to power-saving operation, the control unit 42 may switch from normal operation to power-saving operation based only on the determination that it is late at night performed using the illumination detection unit 53. In other words, even in the case where, for example, a door was opened and closed or the like immediately prior thereto, in the case where the illumination is less than a certain set value and it has been determined to be late at night, it is determined to be unlikely that strong cooling will be necessary thereafter, and power-saving operation is thus carried out; this makes it possible to more effectively save power.

In addition, in this case, continuously monitoring the usage state of the refrigerator 250 using the state detection unit 57 even after power-saving operation is carried out makes it possible to quickly switch to normal operation in the case where power-saving operation was entered based only on the information from the illumination detection unit 53 and in the case where it has been determined that the user has acted with intent.

### (Thirteenth Embodiment)

FIG. 23 is a control flowchart of a refrigerator 250 according to another embodiment, which is not part of the present invention.

Note that in the present embodiment, the same reference numerals are used for configurations that are the same as those in the tenth through twelfth embodiments, and detailed descriptions thereof will be omitted. In addition, descriptions of the portions in which the same technical spirit as in the tenth through twelfth embodiments can be applied will be omitted, and such portions can also be realized in combination with the configurations of the present embodiment.

In the present embodiment, information from the illumination detection unit 53 is not used directly in the determination to commence power-saving operation, and is instead used as information for setting conditions for commencing power-saving operation. In other words, the illumination detection unit 53 in the present embodiment functions as a condition setting unit for the commencement of power-saving operation.

Operations of the refrigerator 250 according to the thirteenth embodiment will be described using FIG. 23.

First, in a state of operation according to the main control flow, in S350, the illumination in the periphery of the installation environment of the refrigerator 250 is detected by the illumination detection unit 53, and that illumination is inputted into the determination unit 41 as the signal Sn1. Furthermore, the determination unit 41 determines whether or not the illumination is less than the late-night determination value. If the result of the determination indicates that the illumination is less than 5 Lx, which is the late-night determination value, it is determined to be late at night, and the logic is advanced to S351, whereas if the illumination is not less than the late-night determination value, the logic is advanced to S356.

Next, in S351, the number of door openings and closings per unit time is detected by the door switch 59, which is an example of the state detection unit 57, and that number is inputted into the determination unit 41 as the signal Sn2. Furthermore, the determination unit 41 determines whether the number of door openings and closings is less than 1, during a specified amount of time of five minutes. If the result of this determination indicates less than 1 time, the logic is advanced to S352, whereas if not, the logic is advanced to S354, where normal operation is carried out, and the logic is then returned to the main control flow.

Next, in S356, or in other words, in the case where the illumination in the periphery of the installation environment of the refrigerator 250 is greater than or equal to the late-night determination value, the number of door openings and closings per unit time is detected by the door switch 59, which is an example of the state detection unit 57, and that number is inputted into the determination unit 41 as the signal Sn2. Furthermore, the determination unit 41 determines whether or not the number of door openings and closings is less than 1, during a specified amount of time of three hours. If the result of this determination indicates less than 1 time, the logic is advanced to S352, whereas if not, the logic is advanced to S354, where normal operation is carried out, and the logic is then returned to the main control flow.

In this manner, the conditions in the following steps differ depending on whether or not the value of the illumination detected by the illumination detection unit 53 is less than the late-night determination value. This is because in the case where it has been determined to be late at night, it can be assumed that there will be almost no human activity, and thus it is possible to proceed to the next step based on a more loose condition, or by determining whether a door has been opened and closed in the past five minutes; however, in the case where it has not been determined to be late at night, a more stringent condition for proceeding to the next step, or determining whether a door has been opened and closed in the past three hours, is set to carry out a more careful determination.

In this manner, a period of five minutes or a period with a difference thirty times or more than that amount, or three hours, is set as the period for identifying the activity state of the user, depending on whether or not the value of the illumination detected by the illumination detection unit 53 is less than the late-night determination value; the presence/absence of user activity is then determined based on the number of door openings and closings during this period. Doing so makes it possible to carry out a precise determination having further taken into account the actual usage state. Note that the specified period and number of openings and closings for the door opening and closing detection/determination at this time may employ an arbitrary value aside from the value in the present embodiment, in which the actual usage state is taken into consideration.

Next, in S352, it is determined whether or not high-load cooling, such as speed-cooling operations including speed ice-making, speed freezing, or the like is necessary; when unnecessary, the logic advances to S353, whereas when necessary, the logic advances to S354, where normal operation is carried out and the logic then returns to the main control flow.

Furthermore, in S353, the interior temperature sensor 58, which is an example of the state detection unit 57, outputs the signal Sn2, indicating the result of detecting the interior temperature of the refrigerator 250, to the determination unit 41, and the determination unit 41 determines whether or not the temperature difference between the interior temperature and a set temperature is greater than or equal to Δt1. If the result of the determination indicates that the temperature difference is less than Δt1, it is assumed that the temperature fluctuation is low, and the logic advances to S355, where power-saving operation is commenced. However, if the temperature difference is greater than or equal to Δt1, it is assumed that the temperature fluctuation is high, and the logic advances to S354, where normal operation is carried out; the logic then returns to the main control flow. Note that Δt1 for the temperature difference serving as the basis of determination at this time may be, for example, 3°C.

With respect to S357, S358, S359, S360, and S361 after power-saving operation has been commenced, the same processing content and concepts as the respective S125, S126, S127, S128, and S129 in the first embodiment or S227, S228, S229, S230, and S231 in the third embodiment can be applied, and thus detailed descriptions thereof will be omitted.

As described thus far, in the present embodiment, as described particularly with respect to S350, S351, and S356, in the case where the determination unit 41 has determined that it is late at night (less than 5 Lx) based on the information from the illumination detection unit 53, the identification period for the determination to move to power-saving operation is a short period of time (for example, five minutes), whereas in the case where the periphery is bright (greater than or equal to 5 Lx), the identification period is a long period of time (for example, three hours). Through this, it is easier to enter power-saving operation late at night, when there is no user activity, and the refrigerator is moved to power-saving operation quickly in the case where it has been determined to be late at night. Meanwhile, in the case where it has not been determined to be late at night, the presence/absence of user activity is carefully identified, which makes it possible to carry out control with high energy conservation effects in a highly-reliable manner.

In this manner, the determination unit 41 determines whether or not it is late at night based on the information from the illumination detection unit 53, and the power-saving operation commencement conditions, which are the conditions for commencing power-saving operation, are changed depending on whether or not it is late at night. Through this, power-saving operation is carried out in the case where human activity has stopped, even in the case where the periphery of the refrigerator 250 is bright (the case where the user is asleep after dawn has broken and the room is bright due to natural light, the case where the user is away from home, and so on); this makes it possible to realize further energy conservation.

### [Industrial Applicability]

The refrigerator according to the present invention can be applied as a household or industrial refrigerator that switches between operating modes, such as power-saving operation, automatically, using a result from a detection unit such as an illumination detection unit or the like provided in the refrigerator. In addition, the present invention can be applied in control when a household or industrial refrigerator automatically carries out power-saving operation.

### [Reference Signs List]

1, 21 refrigerator main body
2, 22a refrigerating compartment door
3 ice compartment door
4 switchable compartment door
5 freezer compartment door
6 vegetable compartment door
7, 29, 77a operation board
7a display unit
8, 30, 53 illumination detection unit
9, 31, 60 operation switch
10, 32, 85 display light
12a refrigerating compartment left door
12b refrigerating compartment right door
13, 37 light-receiving unit cover
39 board cover
14a, 39b board cover side wall surface
17 left/right door joint portion
19, 27 operation unit cover
19a operation unit cover tapered portion
20a left door gasket
20b right door gasket
22 refrigerating compartment
23 ice compartment
24 switchable compartment
25 freezer compartment
26 vegetable compartment
28, 77 operation unit
33 notification light
34 light-receiving element
35 antireflective portion
36 notification light cover
38 operation unit cover transparent portion
39a board cover claw portion
39c board space portion
41 determination unit
42 control unit
48 compressor
49 cooling compartment
50 cooling unit
51 cooling fan
52 defrosting heater
57 state detection unit
58 interior temperature sensor
59 door switch
86 notification unit
100, 200, 250 refrigerator

## Claims

1. A refrigerator comprising:
a refrigerator main body (1);
an operation unit (28) provided on a front surface of said refrigerator main body;
an operation board (7) provided in said operation unit (28);
an operation switch (31), provided in said operation board (7), configured to change a set temperature or switch operation modes; and
an illumination detection unit (8), provided in said operation board (7), configured to detect a brightness in a vicinity of the front surface of said refrigerator main body (1), said illumination detection unit (8) being disposed above said operation switch (31);
**characterized in that**, the refrigerator has a left door (12a) and a right door (12b) which are French doors,
said illumination detection unit (8) is provided in a location having a convex shape protruding forward beyond a plane of the doors (12a, 12b) of a refrigerating compartment, and an operation unit cover (19) is formed in said location that has said convex shape, and
said operation unit (28) including said illumination detection unit (8) is embedded in one of said right door (12b) and said left door (12a), in the vicinity of the border between said right door (12b) and said left door (12a), so that said operation unit (28) is exposed in a front surface of said one of said right door (12b) and said left door (12a).

2. The refrigerator according to Claim 1, further comprising:
a display unit (7a) provided on the front surface of said refrigerator main body (1, 21) and configured to allow a user to check operation state information of said refrigerator, the operation state information indicating a change in the set temperature or the set temperature; and
wherein said illumination detection unit (8) is disposed above said display unit (7a).

3. The refrigerator according to Claim 2,
wherein said display unit (7a) is disposed in said operation board (7).

4. The refrigerator according to Claim 1,
wherein said operation unit (28) includes:
a board cover (39), provided on said operation board (7), and provided so as to form a board space portion in a location aside from in front of said illumination detection unit (8);
wherein said operation unit cover (19) is provided in front of said board cover (39), and
said board cover (39) has higher visual light-blocking properties than said operation unit cover (19).

5. The refrigerator according to Claim 1,
wherein said operation unit includes a side wall surface provided on at least a side of a light-receiving element (34), the light-receiving element (34) being a portion of said illumination detection unit (8) that receives light, and a light-receiving unit cover (13) provided in front of the light-receiving element (34), and
said side wall surface has higher visual light-blocking properties than said light-receiving unit cover (13).

6. The refrigerator according to Claim 5,
wherein a length of said side wall surface in a direction vertical to the front surface of said light-receiving unit cover (13) is a length that positions a leading edge of said side wall surface on a side opposite to said light-receiving unit cover (13) further back than the light-receiving element (34).

## Patentansprüche

1. Kühlschrank, umfassend:
einen Kühlschrankgrundkörper (1);
eine Bedieneinheit (28), die an einer vorderen Fläche des Kühlschrankgrundkörpers vorgesehen ist;
ein Bedienfeld (7), das in der Bedieneinheit (28) vorgesehen ist;
einen Bedienschalter (31), der in dem Bedienfeld (7) vorgesehen ist und dafür ausgelegt ist, eine eingestellte Temperatur zu verändern oder zwischen Betriebsarten umzuschalten; und
eine Beleuchtungsdetektionseinheit (8), die in dem Bedienfeld (7) vorgesehen ist und dafür ausgelegt ist, eine Helligkeit in der Nähe der vorderen Fläche des Kühlschrankgrundkörpers (1) zu ermitteln, wobei die Beleuchtungsdetektionseinheit (8) oberhalb des Bedienschalters (31) angeordnet ist;
**dadurch gekennzeichnet, dass**
der Kühlschrank eine linke Tür (12a) und eine rechte Tür (12b) aufweist, bei denen es sich um French-Door-Kühlschranktüren handelt,
die Beleuchtungsdetektionseinheit (8) an einer Stelle vorgesehen ist, die eine konvexe Form aufweist, welche über eine Ebene der Türen (12a, 12b) eines Kühlfachs hinaus vorsteht, und dass an dieser Stelle eine Bedieneinheitabdeckung (19) ausgebildet ist, welche diese konvexe Form aufweist, und
die Bedieneinheit (28) einschließlich der Beleuchtungsdetektionseinheit (8) in der rechten Tür (12b) bzw. der linken Tür (12a) in der Nähe der Begrenzung zwischen der rechten Tür (12b) und der linken Tür (12a) eingebettet ist, derart, dass die Bedieneinheit (28) in einer vorderen Fläche der rechten Tür (12b) bzw. linken Tür (12a) freiliegend ausgeführt ist.

2. Kühlschrank nach Anspruch 1, weiterhin umfassend:
eine Anzeigeeinheit (7a), die in der vorderen Fläche des Kühlschrankgrundkörpers (1, 21) vorgesehen ist und dafür ausgelegt ist, es einem Benutzer zu ermöglichen, Betriebszustandsdaten des Kühlschranks zu prüfen, wobei die Betriebszustandsdaten eine Veränderung der eingestellten Temperatur oder die eingestellte Temperatur angeben; und
wobei die Beleuchtungsdetektionseinheit (8) oberhalb der Anzeigeeinheit (7a) angeordnet ist.

3. Kühlschrank nach Anspruch 2,
wobei die Anzeigeeinheit (7a) in dem Bedienfeld (7) angeordnet ist.

4. Kühlschrank nach Anspruch 1,
wobei die Bedieneinheit (28) einschließt:
eine Bedienfeldabdeckung (39), die auf dem Bedienfeld (7) vorgesehen ist und die derart bereitgestellt wird, dass sie einen Bedienfeldraumabschnitt an einer Stelle bildet, die sich nicht vor der Beleuchtungsdetektionseinheit (8) befindet;
wobei die Bedieneinheitabdeckung (19) vor der Bedienfeldabdeckung (39) angeordnet ist, und
die Bedienfeldabdeckung (39) höhere lichtblockierende Eigenschaften für sichtbares Licht aufweist als die Bedieneinheitabdeckung (19).

5. Kühlschrank nach Anspruch 1,
wobei die Bedieneinheit einschließt: eine Seitenwandfläche, die auf zumindest einer Seite eines Lichtaufnahmeelements (34) vorgesehen ist, wobei es sich bei dem Lichtaufnahmeelement (34) um einen Abschnitt der Beleuchtungsdetektionseinheit (8) handelt, welcher Licht aufnimmt, und eine Lichtaufnahmeelementabdeckung (13), die vor dem Lichtaufnahmeelement (34) vorgesehen ist, und
die Seitenwandfläche höhere lichtblockierende Eigenschaften für sichtbares Licht aufweist als die Lichtaufnahmeelementabdeckung (13).

6. Kühlschrank nach Anspruch 5,
wobei eine Länge der Seitenwandfläche in einer Richtung vertikal zu der vorderen Fläche der Lichtaufnahmeelementabdeckung (13) eine Länge darstellt, welche eine vordere Kante der Seitenwandfläche auf einer Seite gegenüberliegend zu der Lichtaufnahmeelementabdeckung (13), weiter hinten als das Lichtaufnahmeelement (34) positioniert.

## Revendications

1. Réfrigérateur, lequel comprend:
un corps de base de réfrigérateur (1);
une unité de commande (28) qui est prévue sur une surface avant du corps de base de réfrigérateur;
un panneau de commande (7) qui est prévu dans l'unité de commande (28);
un bouton de commande (31) qui est prévu dans le panneau de commande (7) et qui est conçu pour modifier une température sélectionnée ou pour passer d'un mode de fonctionnement à un autre; et
une unité de détection d'éclairage (8) qui est prévue dans le panneau de commande (7) et qui est conçue pour déterminer une luminosité donnée à proximité de la surface avant du corps de base de réfrigérateur (1), l'unité de détection d'éclairage (8) étant disposée au-dessus du bouton de commande (31);
**caractérisé en ce que**
ledit réfrigérateur présente une porte gauche (12a) et une porte droite (12b), lesquelles sont des portes françaises,
l'unité de détection d'éclairage (8) est prévue à un endroit qui présente une forme convexe faisant saillie par rapport à un plan des portes (12a, 12b) d'un compartiment réfrigérant, et **en ce qu'**à cet endroit donné est formé un couvercle d'unité de commande (19) qui présente la même forme convexe, et
l'unité de commande (28), y compris l'unité de détection d'éclairage (8), est intégrée dans l'une des deux portes, la porte droite (12b) ou la porte gauche (12a), et ce à proximité de la frontière que forment entre elles la porte droite (12b) et la porte gauche (12a), de sorte que l'unité de commande (28) apparaît de manière visible dans une surface avant de ladite une des deux portes, la porte droite (12b) ou la porte gauche (12a).

2. Réfrigérateur selon la revendication 1, lequel comprend en outre:
une unité d'affichage (7a) qui est prévue dans la surface avant du corps de base de réfrigérateur (1, 21) et qui est conçue pour permettre à un utilisateur de contrôler des données d'état de fonctionnement du réfrigérateur, les données d'état de fonctionnement indiquant une modification de la température sélectionnée ou la température sélectionnée; et
l'unité de détection d'éclairage (8) étant disposée au-dessus de l'unité d'affichage (7a).

3. Réfrigérateur selon la revendication 2,
dans lequel l'unité d'affichage (7a) est disposée dans le panneau de commande (7).

4. Réfrigérateur selon la revendication 1,
dans lequel l'unité de commande (28) renferme:
un couvercle de panneau de commande (39) qui est prévu sur le panneau de commande (7) et qui est fourni de manière à former à un endroit qui n'est pas situé devant l'unité de détection d'éclairage (8) une partie réservée au panneau de commande;
le couvercle d'unité de commande (19) étant disposé devant le couvercle de panneau de commande (39), et
le couvercle de panneau de commande (39) présentant des propriétés propres à bloquer la lumière visible lesquelles sont plus élevées que celles du couvercle d'unité de commande (19).

5. Réfrigérateur selon la revendication 1,
dans lequel l'unité de commande renferme: une surface de paroi latérale qui est prévue sur au moins un côté d'un élément récepteur de lumière (34), ledit élément récepteur de lumière (34) étant une partie de l'unité de détection d'éclairage (8) qui reçoit la lumière, et un couvercle d'élément récepteur de lumière (13) qui est prévu devant l'élément récepteur de lumière (34), et
dans lequel la surface de paroi latérale présente des propriétés propres à bloquer la lumière visible lesquelles sont plus élevées que celles du couvercle d'élément récepteur de lumière (13).

6. Réfrigérateur selon la revendication 5,
dans lequel une longueur de la surface de paroi latérale, et ce dans un sens vertical par rapport à la surface avant du couvercle d'élément récepteur de lumière (13), représente une longueur donnée qui fait en sorte qu'un bord avant de la surface de paroi latérale se trouve positionné sur un côté opposé au couvercle d'élément récepteur de lumière (13) de manière à être plus en arrière que l'élément récepteur de lumière (34).
